# EUROPÄISCHE PATENTSCHRIFT

(11) **EP 1 861 466 B1**
(45) Veröffentlichungstag und Bekanntmachung des Hinweises auf die Patenterteilung: **27.08.2008**
(21) Anmeldenummer: 06707394.0
(22) Anmeldetag: 03.03.2006
(51) Int. Cl.: C09D 4/00, C09D 5/00

(54) **MEHRSCHICHTLACKIERUNGEN, VERFAHREN ZU IHRER HERSTELLUNG UND DEREN VERWENDUNG IM AUTOMOBILBAU**
MULTI-LAYERED COATINGS, METHOD FOR THE PRODUCTION THEREOF AND USE THEREOF IN THE CAR INDUSTRY
PEINTURES MULTICOUCHES, LEUR PROCEDE DE PRODUCTION ET LEUR UTILISATION EN CONSTRUCTION AUTOMOBILE

(30) Priorität: 16.03.2005 DE 102005012056
(43) Veröffentlichungstag der Anmeldung: 05.12.2007
(73) Patentinhaber: BASF Coatings AG, 48165 Münster (DE)
(72) Erfinder: RICHERT, Michael, 48282 Emsdetten (DE); FRITZSCHE, Katharina, 79098 Freiburg im Breisgau (DE); KRÜGER, Thomas, 97249 Eisingen (DE); DUSCHECK, Wolfgang, 48165 Münster (DE); WEGNER, Egon, 48268 Greven (DE)
(74) Vertreter: Leifert & Steffan
(86) Internationale Anmeldenummer: PCT/EP2006/001929
(87) Internationale Veröffentlichungsnummer: WO 2006/097201

(56) Entgegenhaltungen:
- EP-A- 0 543 393
- US-B1- 6 344 505

## Beschreibung

### Gebiet der Erfindung

Die vorliegende Erfindung betrifft farb- und/oder effektgebende Mehrschichtlackierungen aus mindestens einer Grundierung (G), mindestens einer darauf angeordneten pigmentierten Beschichtung (P) sowie ggf. einer auf der pigmentierten Beschichtung (P) angeordneten transparenten Beschichtung (K).

Gegenstand der vorliegenden Erfindung ist außerdem ein Verfahren zur Herstellung der Mehrschichtlackierungen sowie deren Verwendung.

### Stand der Technik

Im Bereich der Kraftfahrzeugserienlackierung eingesetzte Mehrschichtlackierungen bestehen heute im Allgemeinen aus einer elektrophoretisch aufgebrachten, vor Korrosion und Steinschlag schützenden Grundierung und einer nachfolgend vor Steinschlag schützenden und die Oberfläche glättenden Füllerschicht. Die Füllerschicht wird dabei meist auf die bereits eingebrannte Grundierung aufgebracht und gehärtet. Es ist aber auch möglich, Grundierung und Füllerschicht gemeinsam zu härten. Auf die ausgehärtete Füllerschicht wird anschließend eine Einschichtlackierung oder eine dekorative Zweischichtlackierung aus einer abhängig vom jeweiligen Farbton in einem oder mehreren Spritzgängen applizierten farb- und/oder effektgebenden Basislackschicht und einer darauf nass-in-nass applizierten, schützenden Klarlackschicht aufgebracht. Anschließend wird die Einschichtlackierung bzw. werden die Basislackschicht(en) und die Klarlackschicht gemeinsam gehärtet.

Zunehmend sind jedoch die Automobilhersteller bestrebt, die Schichtdicken des Lackaufbaus sowie die Anzahl der Arbeitsgänge und ggf. auch die Anzahl der Schichten zu reduzieren, ohne dass es dabei zu einer Verschlechterung des anwendungstechnischen Eigenschaftsprofils der Mehrschichtlackierungen, insbesondere zu einer Verschlechterung der UV-Stabilität, kommt.

So sind Mehrschichtlackierungen bekannt, bei dem eine oder mehrere Basislackschichten direkt auf eine elektrophoretisch abgeschiedene Grundierung appliziert werden. Über die Basislackschicht(en) wird ggf. eine Klarlackschicht appliziert. Anschließend werden die Basislackschicht(en) und ggf. die Klarlackschicht gemeinsam ausgehärtet. Bei diesem Verfahren wird auf die üblicherweise zwischen KTL- und Basislackschicht liegende Füllerschicht verzichtet.

Bei Verzicht auf die Füllerschicht müssen die sonst durch die Füllerschicht übernommenen Aufgaben, wie z.B. Steinschlagschutz, Glättung der Oberfläche, Unterstützung der Deckkraft der Basislackschicht bei Basislacken mit geringer Deckkraft, Vermeidung der Delamination der elektrophoretisch applizierten Grundierung und UV-Schutz der Mehrschichtlackierung, durch die verbliebenen Schichten übernommen werden. Außerdem dürfen die Eigenschaften der Mehrschichtlackierung insgesamt nicht verschlechtert werden, d.h. beispielsweise, dass der Korrosionsschutz nicht verschlechtert werden darf.

Schließlich besteht seitens der Automobilhersteller verstärkt die Forderung, dass die einzelnen Schichten einer Mehrschichtlackierung möglichst problemlos auch mit Hilfe von Beschichtungsmitteln verschiedener Hersteller herstellbar sein sollen.

Die EP-B-823 289 beschreibt ein Verfahren zur Herstellung der eingangs genannten Mehrschichtlackierungen, bei dem zwei Basislackschichten direkt auf eine elektrophoretisch abgeschiedene und gehärtete Grundierung appliziert und gehärtet werden. Anschließend wird auf die gehärteten Basislackschichten noch ein transparentes Beschichtungsmittel appliziert und gehärtet. Die erste Basislackschicht weist dabei aufgrund der Pigmentierung bei einer Trockenfilmschichtdicke von 30 µm eine Lichtdurchlässigkeit bei einer Wellenlänge von 400 bis 700 nm von 5% oder weniger auf.

Nachteilig bei diesem Verfahren ist die erforderliche Aushärtung der Basislackschichten vor der Klarlackapplikation. Außerdem nachteilig ist die zur Erzielung der Lichtundurchlässigkeit erforderliche Pigmentierung der ersten Basislackschicht, die sich nicht für jeden gewünschtem Farbton der Mehrschichtlackierung eignet. Außerdem hat die erforderliche Pigmentierung einen starken Einfluß auf den Farbton der ersten Basislackschicht, was bei dünnen Schichtdicken der zweiten Basislackschicht von beispielsweise 6 bis 11 µm und der damit verbundenen, nur unzureichenden Deckkraft der zweiten Basislackschicht je nach Farbton zu großen Problemen führen kann.

Ferner ist auch aus der DE-A-44 38 504 ein Verfahren zur Herstellung von Mehrschichtlackierungen der eingangs genannten Art bekannt, bei dem auf die bevorzugt elektrophoretisch aufgebrachte Grundierung zwei verschiedene pigmentierte Beschichtungen und eine transparente Beschichtung aufgebracht werden, wobei die erste pigmentierte Beschichtung Füllerfunktionen übernimmt und als Bindemittel eine spezielle Polyurethandispersion sowie Titandioxid als Pigment und Talkum als Füllstoff enthält. Nachteilig bei diesem Verfahren ist aber wiederum die zur Erzielung der Lichtundurchlässigkeit erforderliche Pigmentierung der Basislackschicht(en). Ferner ist eine Zwischentrocknung zwischen der Applikation der ersten und zweiten pigmentierten Beschichtung erforderlich, um das Appearance zu verbessern.

Auch in der noch nicht veröffentlichten deutschen Patentanmeldung P 10 2004 028 368 wird vorgeschlagen, bei Weglassen der Füllerschicht zur Verbesserung der UV-Stabilität der betreffenden Mehrschichtlackierung in der ersten pigmentierten Beschichtung neben mindestens einem farb- und/oder effektgebenden Pigment mindestens ein UV-Strahlung absorbierendes Pigment und Talkum einzusetzen.

Weiterhin sind auch aus der WO03/068418 Mehrschichtlackierungen der eingangs genannten Art bekannt. Die mit dem Wegfall der Füllerschicht verbundenen Probleme hinsichtlich UV-Empfindlichkeit der Grundierung, insbesondere Delamination der Grundierung, sollen gemäß WO 03/068418 dadurch vermieden werden, dass die direkt über der Grundierung befindliche Basislackschicht eine UV-Durchlässigkeit bei 400 nm von maximal 5% aufweist. Hierzu wird der Basislackschicht das handelsübliche Lichtschutzmittel Tinuvin® 1130 auf Basis eines UV Absorbers mit einem Absorptionsmaximum von 346 nm zugesetzt. Je nach Pigmentierung der ersten Basisschicht ist aber auch bei diesem Verfahren die UV Stabilität der Mehrschichtlackierung nicht gewährleistet oder muß über die Pigmentierung eingestellt werden.

Ferner sind aus der EP-B-576 527 UV-Absorber auf der Basis von 5-Thio-substituierten Benztriazolen bekannt, die ein gegenüber den bis dahin bekannten UV-Absorbem in den längerwelligen Bereich verschobenes Absorptionsmaximum von bis zu 367 nm aufweisen. Diese UV-Absorber werden unter anderem auch für den UV-Schutz von elektrophoretisch abgeschiedenen Grundierungen empfohlen. Allerdings führt auch die Verwendung dieser UV-Absorber in den Mehrschichtlackierungen der eingangs genannten Art nicht in allen Fällen zu einer ausreichenden UV-Stabilität.

Schließlich sind weitere UV-Absorber mit einem in den längerwelligen Bereich verschobenen Absorptionsmaximum auf der Basis von Benztriazolen bekannt, wie die in der US-A-5,436,349 beschriebenen, in der 5-Position mit Alkylsulfonylgruppen substituierten Benztriazole oder die in der US-A-6,166,218 beschriebenen, in der 5-Position mit CF3-Gruppen substituierten Benztriazole. Allerdings führt auch die Verwendung dieser UV-Absorber in den Mehrschichtlackierungen der eingangs genannten Art nicht in allen Fällen zu einer ausreichenden UV-Stabilität.

### Aufgabe

Der vorliegenden Erfindung lag daher die Aufgabe zugrunde, Mehrschichtlackierungen der eingangs genannten Art zur Verfügung zu stellen, die auch nach Feuchtebelastung im Dampfstrahltest am Andreaskreuz (Prüfbedingungen: Zeit 60 sec, Druck 60 bar, Abstand 10 cm, Temperatur 67°C) bei UV-Belastung, insbesondere bei Belastung von 6000 Stunden im sogenannten WOM-CAM 180 Q/B- Test nach VDA-Prüfblatt (E) 621 - 430 Apr 97 und/oder SAE J1960 JUN89 (im Folgenden kurz CAM 180 - Test genannt), keine Delamination der pigmentierten Schicht von der Grundierung zeigen.

Ferner sollten die Mehrschichtlackierungen in allen vom Automobilhersteller gewünschten Farbtönen und - sofern eine transparente Beschichtung vorhanden ist - unter Verwendung der bereits derzeit eingesetzten transparenten Beschichtungsmittel herstellbar sein.

Außerdem sollten die Mehrschichtlackierungen mittels eines möglichst einfachen und kostengünstigen Verfahrens herstellbar sein, wobei bevorzugt die Schichtdicken der einzelnen Schichten so gering wie möglich sein sollten. Bevorzugt sollten außerdem die einzelnen Schichten der Mehrschichtlackierung dabei möglichst problemlos auch mit Hilfe von Beschichtungsmitteln verschiedener Hersteller herstellbar sein.

Schließlich sollten die Mehrschichtlackierungen die üblicherweise an eine Automobillackierung gestellten Anforderungen erfüllen, insbesondere aber den geforderten guten Korrosionsschutz und Steinschlagschutz, aufweisen.

### Lösung der Aufgabe

Diese Aufgabe wird überraschenderweise durch Mehrschichtlackierungen der eingangs genannten Art gelöst, die dadurch gekennzeichnet sind, dass die pigmentierte Beschichtung (P) und/oder die Grundierung (G) mindestens einen UV-Absorber (UV1) enthält, der ein Absorptionsmaximum von mindestens 370 nm aufweist.

Gegenstand der vorliegenden Erfindung ist außerdem ein Verfahren zur Herstellung der Mehrschichtlackierungen sowie deren Verwendung.

### Vorteile der Erfindung

Es ist überraschend und war nicht vorhersehbar, dass durch die erfindungsgemäße Verwendung der UV-Absorber (UV1) mit einem Absorptionsmaximum von mindestens 370 nm in der pigmentierten Schicht und/oder in der Grundierung Mehrschichtlackierungen erhalten werden, die auch nach Feuchtebelastung eine ausreichende UV-Stabilität aufweisen, und zwar auch bei bisher kritischen Farbtönen, also insbesondere auch dann, wenn die pigmentierten Beschichtungen keine UV absorbierenden Pigmente, wie beispielsweise Russ und/oder entsprechende Eisenoxidpigmente, enthalten.

Die erfindungsgemäßen Mehrschichtlackierungen weisen daher auch bei UV-Belastung, insbesondere auch nach Feuchtebelastung im o.g. Dampfstrahltest am Andreaskreuz bei UV-Belastung, insbesondere bei Belastung von 6000 Stunden im o.g. CAM 180 - Test, keine Delamination der pigmentierten Beschichtung von der Grundierung auf.

Da die verwendeten UV-Absorber einen viel geringeren Einfluß auf den Farbton der Schicht, der sie zugesetzt werden, als die bisher für den UV-Schutz eingesetzten speziellen UV absorbierenden Pigmente haben, können die erfindungsgemäßen Mehrschichtlackierungen in allen vom Automobilhersteller gewünschten Farbtönen zur Verfügung gestellt werden.

Überraschenderweise ist es dabei sogar möglich, selbst dann die Mehrschichtlackierungen in allen gewünschten Farbtönen zur Verfügung stellen, wenn die zweite Basislackschicht nur eine sehr geringe Schichtdicke unterhalb des Deckvermögens, bevorzugt eine Schichtdicke von 40 bis 70% der Schichtdicke, die zur Erzielung des Deckvermögens erforderlich wäre, aufweist. Es ist daher beispielsweise erfindungsgemäß möglich, dass bei Verwendung von transparenten Beschichtungsmitteln die zweite Basislackschicht nur eine Schichtdicke von 6 bis 8 µm im Falle von Metalliclackierungen und von ca. 11 µm im Falle anderer Uni-Lackierungen, aufweist, wobei je nach verwendeter Applikationsmethode allerdings auch höhere Schichtdicken möglich sind, obwohl es von dem Deckvermögen und der Farbgebung nicht erforderlich ist.

Ferner weisen die erfindungsgemäßen Mehrschichtlackierungen den Vorteil auf, dass sie mittels eines möglichst einfachen und kostengünstigen Verfahrens herstellbar sind. Außerdem ist es auch möglich, die einzelnen Schichten der Mehrschichtlackierung auch mit Hilfe von Beschichtungsmitteln verschiedener Hersteller herzustellen.

Schließlich erfüllen die erfindungsgemäßen Mehrschichtlackierungen die üblicherweise an eine Automobillackierung gestellten Anforderungen, weisen also insbesondere den geforderten guten Korrosionsschutz und Steinschlagschutz auf.

### Ausführliche Beschreibung der Erfindung

### Erfindungsgemäße Mehrschichtlackierungen

Die erfindungsgemäßen Mehrschichtlackierungen weisen mindestens eine Grundierung (G), mindestens eine darauf angeordnete pigmentierte Beschichtung (P) sowie ggf. eine auf der pigmentierten Beschichtung (P) angeordnete transparente Beschichtung (K) auf. Bevorzugt im Rahmen der vorliegenden Erfindung sind dabei aber Mehrschichtlackierungen, bei denen die pigmentierte Beschichtung (P) aus zwei oder mehreren pigmentierten Beschichtungen (P1) bis (Pn), besonders bevorzugt aus zwei pigmentierten Beschichtungen (P1) und (P2), besteht.

Es ist erfindungswesentlich, dass die Grundierung (G) und/oder die pigmentierte Beschichtung (P) oder - im Falle von Mehrschichtlackierungen aus mindestens zwei pigmentierten Beschichtungen (P1) und (P2) - die pigmentierte Beschichtung (P1) und/oder (P2) und/oder (Pn) mindestens einen UV-Absorber (UV1) enthalten, der ein Absorptionsmaximum von mindestens 370 nm, bevorzugt von mindestens 370 nm bis 450 nm, bevorzugt von 375 bis 450 nm, besonders bevorzugt von 378 nm bis 440 nm und ganz besonders bevorzugt von 378 bis 420 nm, aufweist.

Bevorzugt weist der erfindungsgemäß eingesetzte UV-Absorber (UV1) außerdem im Bereich von 300 bis 405 nm noch mindestens 50% der Absorption, verglichen mit der Absorption im Absorptionsmaximum, auf. Besonders bevorzugt weist der erfindungsgemäß eingesetzte UV-Absorber außerdem im Bereich von 405 bis 420 nm noch mindestens 10 % der Absorption, verglichen mit der Absorption im Absorptionsmaximum, auf.

Bevorzugt enthält bzw. enthalten die pigmentierte(n) Beschichtung(en) (P) bzw. (P1) bis (Pn) den erfindungsgemäß eingesetzten UV-Absorber (UV1).

Aufgrund der Eigenfarbe der erfindungsgemäß eingesetzten UV-Absorber (UV1) mit einem UV-Absorptionsmaximum von mindestens 370 nm sind besonders bevorzugt entweder Mehrschichtlackierungen aus zwei pigmentierten Beschichtungen, bei denen die unterste pigmentierte Beschichtung (P1) den erfindungsgemäß eingesetzten UV-Absorber enthält, oder Mehrschichtlackierungen aus mehr als zwei pigmentierten Beschichtungen, bei denen die unterste pigmentierte Beschichtung (P1) und/oder die untersten pigmentierten Beschichtungen (P1) bis (Pn-1) den erfindungsgemäß eingesetzten UV-Absorber (UV1) enthalten.

Ganz besonders bevorzugt sind Mehrschichtlackierungen aus
- mindestens einer Grundierung (G),
- einer darauf angeordneten ersten pigmentierten Beschichtung (P1),
- einer auf der ersten pigmentierten Beschichtung (P1) angeordneten zweiten pigmentierten Beschichtung (P2) sowie
- einer auf der pigmentierten Beschichtung (P2) angeordneten transparenten Beschichtung (K),
wobei die erste pigmentierte Beschichtung (P1) den UV-Absorber (UV1) enthält, der ein Absorptionsmaximum von mindestens 370 nm aufweist.

Bevorzugt wird außerdem entweder ein oder mehrere UV-Absorber (UV1) mit einem Absorptionsmaximum von mindestens 370 nm eingesetzt, die nicht in die angrenzenden Schichten, insbesondere nicht in die transparente Beschichtung (K), migrieren, um insbesondere Farbtonprobleme zu verhindern. Falls erforderlich, können daher UV-Absorber eingesetzt werden, die nach dem Fachmann geläufigen Methoden immobilisiert worden sind.

Beispiele für geeignete UV-Absorber (UV1), die ein Absorptionsmaximum von mindestens 370 nm aufweisen, sind beispielsweise UV-Absorber aus der Klasse der substituierten Hydroxy-Phenyl-Benzotriazole, wobei durch die Art und Lage der Substituenten der Benzotriazole der Wellenlängenbereich des Absorptionsmaximums gesteuert wird.

Bevorzugt werden substituierte Hydroxy-Phenyl-Benzotriazole eingesetzt, die folgende Struktur aufweisen: 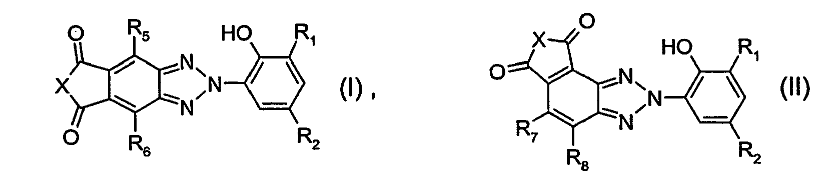 wobei
**R₁** Wasserstoff, ein verzweigter oder unverzweigter Alkylrest mit 1 bis 24 C-Atomen, ein verzweigter oder unverzweigter Alkenylrest mit 2 bis 18 C-Atomen, ein Cycloalkylrest mit 5 bis 12 C-Atomen, ein Phenylalkylrest mit 7 bis 15 C-Atomen, ein Phenylrest ist, oder dieser Phenyl- oder dieser Phenylalkylrest am Phenylring mit 1 bis 4 Alkylgruppen mit 1 bis 4 C-Atomen substituiert sein kann; oder wobei
**R₁** eine Gruppe 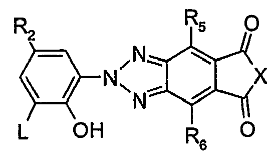 oder eine Gruppe 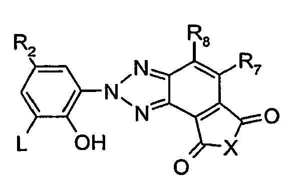 ist, wobei L ein Alkylenrest mit 1 bis 12 C-Atomen, ein Alkylidenrest mit 2 bis 12 C-Atomen, ein Benzylidenrest, ein p-Xylolrest oder ein Cycloalkylenrest mit 5 bis 7 C-Atomen ist;
**R₂** ein verzweigter oder unverzweigter Alkylrest mit 1 bis 24 C-Atomen, ein verzweigter oder unverzweigter Alkenylrest mit 2 bis 18 C-Atomen, ein Cycloalkylrest mit 5 bis 12 C-Atomen, ein Phenylalkylrest mit 7 bis 15 C-Atomen, ein Phenylrest ist, oder dieser Phenyl- oder dieser Phenylalkylrest am Phenylring mit 1 bis 3 Alkylgruppen mit 1 bis 4 C-Atomen substituiert sein kann; oder wobei
dieser Alkylrest substituiert sein kann mit einer oder mehreren -OH, - OCO-R₁₁, -OR₁₄, -NCO or -NH₂ Gruppen oder Mischungen davon, oder wobei dieser Alkyl- oder Alkenylrest unterbrochen sein kann durch eine oder mehrere -O-, -NH- oder -NR₁₄- Gruppen oder Mischungen davon und die unsubstituiert oder substituiert sein können mit einer oder mehreren -OH, -OR₁₄ oder -NH₂ Gruppen oder Mischungen davon; wobei
**R₁₁** Wasserstoff, ein verzweigter oder unverzweigter Alkylrest mit 1 bis 18 C-Atomen, ein C₅-C₁₂ Cycloalkylrest, ein verzweigter oder unverzweigter Alkenylrest mit 3 bis 8 C-Atomen, ein Phenyl-, Naphthyl-oder C₇-C₁₅-Phenylalkylrest ist; und
**R₁₄** Wasserstoff oder ein verzweigter oder unverzweigter Alkylrest mit 1 bis 24 C-Atomen ist
**R₂** ist -OR₁₄, eine Gruppe -C(O)-O-R₁₄, -C(O)-NHR₁₄ oder-C(O)-NR₁₄R'₁₄, wobei R'₁₄ die gleiche Bedeutung hat wie R₁₄; oder
**R₂** ist -SR₁₃, -NHR₁₃ oder -N(R₁₃)₂; oder
**R₂** ist -(CH₂)ₘ-CO-X₁-(Z)ₚ-Y-R₁₅ wobei
**X₁** ist -O- oder -N(R₁₆)-,
**Y** ist -O- oder -N(R₁₇)- oder eine direkte Bindung,
**Z** ist C₂-C₁₂-Alkylen, C₄-C₁₂-Alkylen unterbrochen durch ein oder mehrere Stickstoffatome, Sauerstoffatome oder eine Mischung davon, oder ist C₃-C₁₂-Alkylen, Butenylen, Butynylen, Cyclohexylen oder Phenylen, wobei jeder dieser Reste zusätzlich substituiert sein kann durch eine OH-Gruppe oder eine Gruppe: 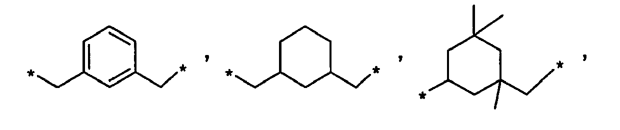 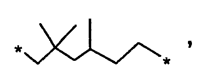 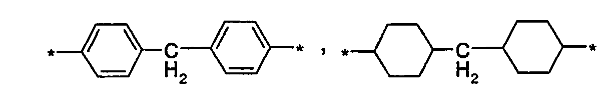 wobei * eine Bindung bedeutet
oder wenn Y eine direkte Bindung ist, kann Z zusätzlich auch eine direkte Bindung sein;
**m** ist 0, 1 oder 2,
**p** ist 1, oder p ist 0 wenn X und Y jeweils -N(R₁₆)- and -N(R₁₇)-sind,
**R₁₅** ist Wasserstoff, C₁-C₁₂-Alkyl, oder eine Gruppe 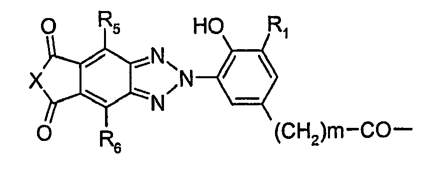 oder 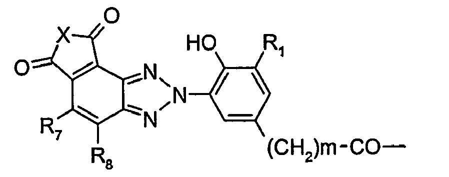 oder eine Gruppe -CO-C(R₁₈)=C(H)R₁₉ oder, wenn Y -N(R₁₇)-ist, formt sie zusammen mit R₁₇ eine Gruppe -CO-CH=CH-CO- wobei
**R₁₈** Wasserstoff oder Methyl ist, und **R₁₉** Wasserstoff, Methyl oder - CO-X₁-R₂₀ ist, wobei
**R₂₀** Wasserstoff, C₁-C₁₂ -Alkyl oder eine Gruppe der Formel 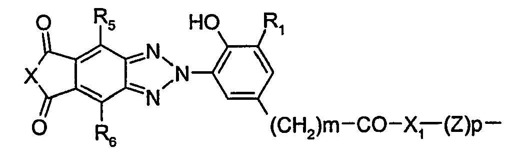 oder 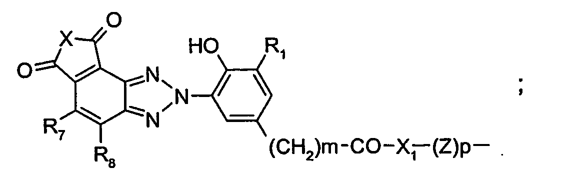 **R₅, R₆, R₇** and **R₈** jeweils unabhängig voneinander Wasserstoff, Halogen, CN, NO₂ oder NH₂ sind,
**R₁₃** ist Alkyl mit 1 bis 20 C-Atomen, Hydroxyalkyl mit 2 bis 20 C-Atomen, Alkenyl mit 3 bis 18 C-Atomen, Cycloalkyl mit 5 bis 12 C-Atomen, Phenylalkyl mit 7 bis 15 C-Atomen, Phenyl oder Naphthyl, die beide mit einem oder zwei Alkylresten mit 1 bis 4 C-Atomen substituiert sein können;
**R₁₆** and **R₁₇** sind unabhängig voneinander Wasserstoff, C₁-C₁₂-Alkyl, C₃-C₁₂-Alkyl unterbrochen durch 1 bis 3 Sauerstoffatome, oder Cyclohexyl oder C₇-C₁₅-Phenylalkyl, und R₁₆ zusammen mit R₁₇ kann auch Ethylen sein, wenn Z Ethylen ist;
**X** ist O oder NE₁ wobei
**E₁** Wasserstoff, ein verzweigter oder unverzweigter Alkylrest mit 1 bis 24 C-Atomen, ein verzweigter oder unverzweigter Alkenylrest mit 2 bis 18 C-Atomen, ein C₂-C₆-Alkinyl, ein C₅-C₁₂-Cycloalkyl, Phenyl, Naphthyl oder C₇-C₁₅-Phenylalkyl; oder dieser verzweigte oder unverzweigte Alkylrest mit 1 bis 24 C-Atomen, dieser verzweigte oder unverzweigte Alkenylrest mit 2 bis 24 C-Atomen, dieser C₂-C₆-Alkyinyl können substituiert sein durch ein oder mehrere -F, -OH, -OR₂₂, -NH₂, -NHR₂₂, - N(R₂₂)₂, -NHCOR₂₃, -NR₂₂COR₂₃, -OCOR₂₄, -COR₂₅, -SO₂R₂₆,-PO(R₂₇)ₙ(R₂₈)₂₋ₙ, -Si(R₂₉)ₙ(R₃₀)₃₋ₙ, -Si(R₂₂)₃, -N⁺(R₂₂)₃ A⁻, -S⁺(R₂₂)₂ A⁻, - Oxiranyl- Gruppen oder Mischungen davon; oder dieser verzweigte oder unverzweigte Alkylrest mit 1 bis 24 C-Atomen, dieser verzweigte oder unverzweigte Alkenylrest mit 2 bis 24 C-Atomen, dieser C₂-C₆-Alkinyl können unterbrochen sein durch ein oder mehrere -O-, -S-, -NH- or - NR₂₂- Gruppen oder Kombinationen davon;
diese Phenyl, Naphthyl oder C₇-C₁₅-Phenylalkylreste können auch mit einem oder mehreren -Halogen, -CN, -CF₃, -NO₂, -NHR₂₂, -N(R₂₂)₂, - SO₂R₂₆, -PO(R₂₇)ₙ(R₂₈)₂₋ₙ, -OH, -OR₂₂, -COR₂₅, -R₂₅; Resten substituiert sein, wobei
**n** 0, 1 oder 2 ist;
**R₂₂** ein verzweigter oder unverzweigter Alkylrest mit 1 bis 18 C-Atomen, verzweigter oder unverzweigter Alkenylrest mit 2 bis 18 C-Atomen, ein C₅-C₁₀ Cycloalkyl, Phenyl oder Naphthyl, C₇-C₁₅ -Phenylalkyl, oder zwei R₂₂ Reste sind, wenn benachbart zu einem N oder Si Atom und sie zusammen mit dem Atom, mit dem sie verbunden sind, einen Pyrrolidin-, Piperidin- oder Morpholin- Ring bilden können;
**R₂₃** ist Wasserstoff, OR₂₂, NHR₂₂, N(R₂₂)₂ oder hat die gleiche Bedeutung wie R₂₂,
**R₂₄** ist OR₂₂, NHR₂₂, N(R₂₂)₂ oder hat die gleiche Bedeutung wie R₂₂,
**R₂₅** ist Wasserstoff, OH, OR₂₂, NHR₂₂ oder N(R₂₂)₂, O-glycidyl oder hat die gleiche Bedeutung wie R₂₂,
**R₂₆** ist OH, OR₂₂, NHR₂₂ oder N(R₂₂)₂,
**R₂₇** ist NH₂, NHR₂₂ oder N(R₂₂)₂,
**R₂₈** ist OH oder OR₂₂,
**R₂₉** ist CI oder OR₂₂,
**R₃₀** ist verzweigtes oder unverzweigtes C₁-C₁₈ Alkyl; oder
**E₁** ist eine Gruppe 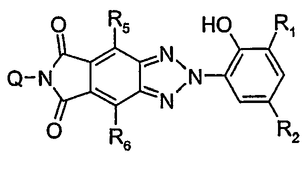 oder 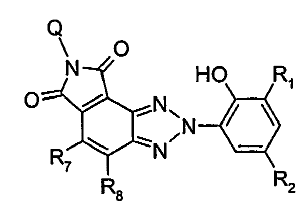 wobei
R₁ bis R₈ die oben angegebene Bedeutung haben und
**Q** verzweigtes oder unverzeigtes C₂-C₁₂-Alkylene, C₂-C₁₂-Alkylene, das durch ein oder mehrere -O-, NH oder NR₁₄ Atome unterbrochen ist, C₅-C₁₀-Cycloalkylen, para-Phenylen oder eine Gruppe 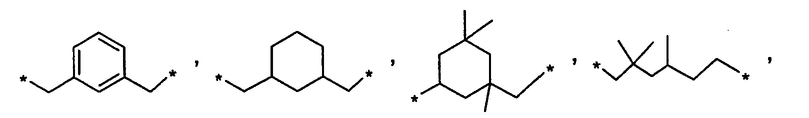 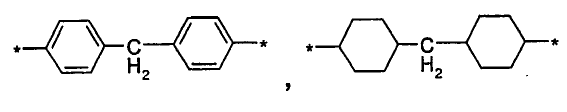 ist, wobei * eine Bindung bedeutet.

Halogen ist beispielsweise Fluor, Chlor, Brom oder Jod, bevorzugt Chlor.

Verzweigte oder unverzweigte Alkylreste mit 1 bis 24 C-Atomen sind beispielsweise Methyl, Ethyl, Isopropyl, n-Butyl, Isobutyl, sec-Butyl, tert-Butyl, tert-Amyl, 2-Ethylhexyl, tert-Octyl, Lauryl, tert-Dodecyl, Tridecyl, n-Hexadecyl, n-Octadecyl oder Eicosyl- Reste.

Verzweigte oder unverzweigte Alkenylreste mit 2 bis 18 C-Atomen sind beispielsweise Allyl-, Pentenyl-, Hexenyl-, Doceneyl- oder Oleyl- Reste. Bevorzugt sind Alkenylreste mit 3 bis 16, insbesondere 3 bis 12 und ganz besonders bevorzugt 2 bis 6 C-Atomen.

Cycloalkyl mit 5 bis 12 C-Atomen sind z.B. Cyclopentyl-, Cyclohexyl-, Cycloheptyl-, Cyclooctyl- und Cyclododecyl- Reste.

C₁-C₄ Alkyl-substituiertes C₅-C₈-Cycloalkyl ist z.B. Methylcyclopentyl-, Dimethylcyclopentyl-, Methylcyclohexyl-, Dimethylcyclohexyl-, Trimethylcyclohexyl- oder tert-Butylcyclohexyl- Reste.

Beispiele für Phenylalkyl mit 7 bis 15 C-Atomen sind Benzyl-, Phenylethyl-, α-Methylbenzyl- oder α, α-Dimethylbenzyl-Reste.

Beispiele für alkyl-substituiertes Phenyl sind Toluyl- und Xylyl- Reste.

Alkyl substituiert durch ein oder mehrere -O- Gruppen und/oder substituiert durch eine oder mehrere -OH-Gruppen kann z.B. -(OCH₂CH₂)_{w}OH oder -(OCH₂CH₂)_{w}O(C₁-C₂₄alkyl) mit w 1 bis 12 sein.

Alkyl unterbrochen durch ein oder mehrere -O- kann sich ableiten von Ethylenoxid-Einheiten oder von Propyleneoxid- Einheiten oder Mischungen von beiden.

Bei Alkyl unterbrochen durch -NH- or -NR₁₄- leiten sich die Radikale analog zu den obenbeschriebenen -O- unterbrochenen Resten ab, bevorzugt sind wiederholende Einheiten von Ethylenediamin.

Beispiele sind CH₃-O-CH₂CH₂-, CH₃-NH-CH₂CH₂-, CH₃-N(CH₃)-CH₂-, CH₃-O-CH₂CH₂-O-CH₂CH₂-, CH₃-(O-CH₂CH₂-)₂O-CH₂CH₂-, CH₃-(O-CH₂CH₂-)₃O-CH₂CH₂- oder CH₃-(O-CH₂CH₂-)₄O-CH₂CH₂-.

Alkylen ist beispielsweise Ethylen, Tetramethylen, Hexamethylen, 2-Methyl-1,4-tetramethylen, Hexamethylen, Octamethylen, Decamethylen und Dodecamethylen.

Cycloalkylen ist z.B. Cyclopentylen, Cyclohexylen, Cycloheptylen, Cyclooctylen und Cyclododecylen, bevorzugt Cyclohexylen.

Alkylen unterbrochen durch Sauerstoff, NH oder -NR₁₄- ist z.B. -CH₂CH₂-O-CH₂CH₂-, -CH₂CH₂-NH-CH₂CH₂-, -CH₂CH₂-N(CH₃)-CH₂CH₂-, -CH₂CH₂-O-CH₂CH₂-O-CH₂CH₂-, -CH₂CH₂-(O-CH₂CH₂-)₂O-CH₂CH₂-, -CH_{Z}CH₂-(O-CH₂CH₂-)₃O-CH₂CH₂-, -CH₂CH₂-(O-CH₂CH₂-)₄O-CH₂CH₂-oder -CH₂CH₂-NH-CH₂CH₂-.

Das Radikal Q ist unverzweigtes oder verzweigtes C₁-C₁₂Alkylen, C₅-C₁₀Cycloalkylen, para-Phenylen oder eine Gruppe 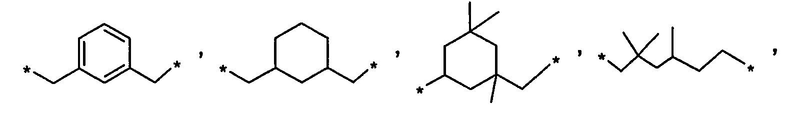 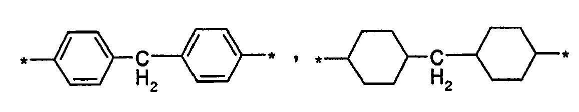 wobei * eine Bindung bedeutet.

Das Radikal kann erhalten werden von leicht erhältlichen Diaminen, beispielsweise den im Handel unter der Bezeichnung Jeffamin erhältlichen Aminen. Beispiele für Diamine sind Ethylendiamin, Propylendiamin, 2-Methyl-1,5-pentamethylendiamin, Isophorondiamin oder 1,2-Diaminocyclohexan.

Analog kann das Radikal Z von denselben Diaminen oder von den entsprechenden Diolen abgeleitet werden.

Typische Jeffamine sind z.B. D-2000 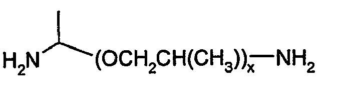 wobei x = 33.1 ist oder ED-2003 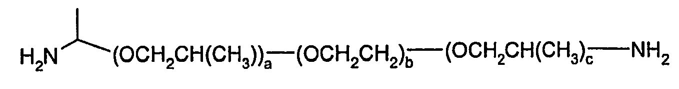 wobei a + c = 5 and b = 39.5 ist.

Bevorzugt eingesetzt werden UV-Absorber (UV1) der Formeln (I) und (II), wobei
R₁ Wasserstoff, unverzweigtes oder verzweigtes Alkyl mit 1 bis 12 C-Atomen oder Phenylalkyl mit 7 bis 15 C-Atomen ist
R₂ Wasserstoff, unverzweigtes oder verzweigtes Alkyl mit 1 bis 12 C-Atomen oder Phenylalkyl mit 7 bis 15 C-Atomen oder Phenyl ist, oder dieser Phenyl- oder dieser Phenylalkylrest am Phenylring mit 1 bis 3 Alkylgruppen mit 1 bis 4 C-Atomen substituiert sein kann;
R₅ und R₆ Wasserstoff sind oder einer oder beide sind Cl oder Br;
R₇ und R₈ sind unabhängig voneinander Wasserstoff, Cl oder Br;
X ist O oder NE_{1,} wobei
E₁ Wasserstoff, unverzweigtes oder verzweigtes Alkyl mit 1 bis 6 C-Atomen, welches unsubstituiert oder substituiert ist mit 1 bis 4 OH, Phenyl welches unsubstituiert oder substituiert ist mit F, CF₃, CN oder Cl, oder C₇-C₉Phenylalkyl.

Besonders bevorzugt eingesetzt werden Absorber (UV1) mit der nachfolgend genannten Formel (1 b) oder (2c) 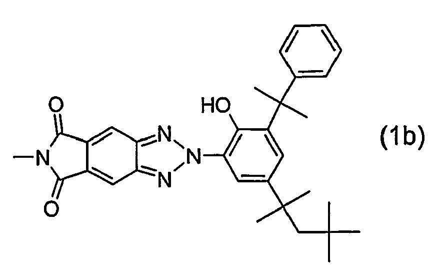 oder

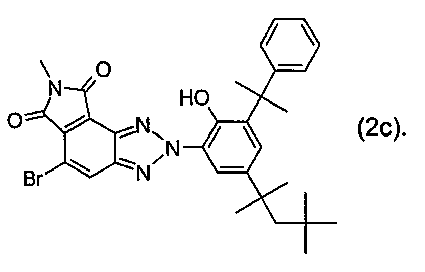

Geeignet ist beispielsweise auch das von der Firma Ciba Spezialitätenchemie Holding AG Schweiz unter Bezeichnung Tinuvin® CGL 957 entwickelte Versuchsprodukt eines UV-Absorbers auf Basis eines substituierten Hydroxy-Phenyl-Benzotriazols mit einem UV-Absorptionsmaximum von 380 nm. Dieser UV-Absorber Tinuvin® CGL 957 weist außerdem im gesamten Bereich von 300 bis 405nm eine Absorption von mehr als 50 % der Absorption bei 380 nm sowie im Bereich von 405 bis 420 nm eine Absorption von mehr als 10 % der Absorption bei 380 nm auf.

Überraschenderweise und im Gegensatz zu den bisher für den UV-Schutz eingesetzten Pigmenten führt die Verwendung der erfindungsgemäß eingesetzten UV-Absorber (UV1) in den jeweiligen Schichten nur zu einer geringen Farbtonänderung der jeweiligen Schicht. Im Falle der Mehrschichtlackierungen aus zwei oder mehreren pigmentierten Beschichtungen, bei denen die unterste pigmentierte Beschichtung (P1) und/oder die untersten pigmentierten Beschichtungen (P1) bis (Pn-1) den erfindungsgemäß eingesetzten UV-Absorber (UV1) enthalten, ist daher der Farbtonunterschied zwischen (P1) und (P2) bzw. zwischen (Pn-1) und (Pn) nur gering. Um daher einen bestimmten Zielfarbton zu erreichen, muß die oberste pigmentierte Schicht (P2) bzw. (Pn) nicht in einer deckenden Schichtdicke aufgebracht werden.

Die oberste pigmentierte Schicht (P2) bzw. (Pn) kann daher nur eine sehr geringe Schichtdicke unterhalb des Deckvermögens, bevorzugt eine Schichtdicke von 40% bis 70% der Schichtdicke, die zur Erzielung des Deckvermögens erforderlich wäre, aufweisen, wobei je nach verwendeter Applikationsmethode allerdings auch höhere Schichtdicken möglich sind, obwohl es von dem Deckvermögen und der Farbgebung nicht erforderlich ist.

Es ist daher beispielsweise erfindungsgemäß möglich, dass bei Verwendung von transparenten Beschichtungsmitteln die zweite pigmentierte Schicht nur eine Schichtdicke von 6 bis 8 µm im Falle von Metalliclackierungen und von ca. 11 µm im Falle anderer Uni-Lackierungen, aufweist.

Bei den bisher für den UV-Schutz eingesetzten Pigmenten kommt es dagegen zu einer viel stärkeren Farbtonänderung der jeweiligen Schicht, so dass es erforderlich werden kann, dass die oberste pigmentierte Schicht (P2) bzw. (Pn) bevorzugt deckend oder aber zumindest in einer Schichtdicke von im Allgemeinen mehr als 70% der Schichtdicke, die zur Erzielung des Deckvermögens erforderlich wäre, aufgebracht werden muß. Die resultierenden hohen Schichtdicken wiederum können zu Problemen mit Kochern führen oder aber die Umstellung der Applikationsverfahren erforderlich machen.

Die Grundierung (G) und/oder die pigmentierte Beschichtung (P) oder die pigmentierte Beschichtung (P1) und/oder (P2) und/oder (Pn) können neben den erfindungsgemäßen UV-Absorbem (UV1) mit einem Absorptionsmaximum von mindestens 370 nm auch noch weitere Lichtschutzmittel, insbesondere andere, von (UV1) verschiedene UV-Absorber (UV2) und/oder sterisch gehinderte Amine (HALS) und/oder Antioxidantien, enthalten. Beispiele für geeignete weitere Lichtschutzmittel sind beispielsweise in der EP-B-576 527, Seite 7, Zeile 22, bis Seite 10, Zeile 8, der EP-A-1 308 084, Seite 2, Zeile 15, bis Seite 20, Zeile 40, sowie im Kittel, Lehrbuch der Lacke und Beschichtungen, Band III, Verlag W.A. Colomb in der Heenemann GmbH, 1976, Seiten 367 bis 375, beschrieben.

Beispiele für ggf. eingesetzte, weitere UV-Absorber (UV2) sind UV-Absorber, die ein Absorptionsmaximum von weniger als 370 nm, bevorzugt ein Absorptionsmaximum von 280 nm bis weniger als 370 nm, aufweisen.

Geeignet sind daher beispielsweise die bekannten UV-Absorber auf der Basis von substituierten 2-Hydroxy-Phenyl-Benztriazolen und/oder von Hydroxy-Phenyl-Triazinen, wie z.B. 5-Thio-substituierten 2-Hydroxy-Phenyl-Benztriazolen, 5-Chloro-substituierten 2-Hydroxy-Phenyl-Benztriazolen,Tris-aryl-s-triazinen, wie z.B.
2-(2H-benzotriazol-2-yl)-cresol,
2-(2-Hydroxy-5-t-octylphenyl)-benzotriazol,
2-(2H-benzotriazol-2-yl)-4,6-bis-(1,1-dimethylethyl)-phenol,
2-(2H-benzotriazol-2-yl)-4,6-bis-(1-methyl-1-phenylethyl)phenol,
2-(2H-benzotriazol-2-yl)-4,6-ditert.pentyl-phenol,
2-(2H-benzotriazol-2-yl)-4,6-bis-()-phenol,
Iso-octyl-3-(3(2H-benzotriazol-2-yl)-5-tert.butyl-4-hydroxyphenyl-propionat,
Octyl-3-(3-tert.butyl-4-hydroxy-5(5-chloro-2-H-benzotriazol-2-yl)phenyl)propionat,
2-(5-chloro-2H-benzotriazol-2-yl)-6-(1,1-dimethylethyl)-4-methyl-phenol und
eine Mischung aus a-3-(3-(2H-benzotriazol-2-yl)-5-tert.butyl-4-hydroxy-phenyl)propionyl-j-hydroxypoly(oxyethylen) und a-3-(3-(2H-benzotriazol-2-yl)-5-tert.butyl-4-hydroxyphenyl)propionyloxypoly(oxyethylen).

Geeignete UV-Absorber sind beispielsweise auch in der EP-B-576 527, Seite 2, Zeile 47, bis Seite 4, Zeile 56 und Seite 9, Zeile 26 bis 46, der EP-B-682,680, Seite 3, Zeile 33, bis Seite 7, Zeile 11, der EP-A-1,308,084, Seite 2, Zeile 13, bis Seite 16, Zeile 45, und der US-A-6,166,218, Spalte 23, Zeile 12, bis Spalte 25, Zeile 23, beschrieben.

Geeignete UV-Absorber, die ein Absorptionsmaximum von weniger als 370 nm aufweisen, sind auch im Handel erhältlich, wie z.B. Tinuvin® 1130, Tinuvin® 109, Tinuvin® 171, Tinuvin® 384, Tinuvin® 326, Tinuvin® 328, Tinuvin® 320, Tinuvin® 234, Tinuvin® P, Tinuvin® 405, Tinuvin® 400, Tinuvin® R 796 und CGL 479 der Firma Ciba Spezialitätenchemie Holding AG Schweiz.

Beispiele für geeignete Lichtschutzmittel auf Basis sterisch gehinderter Amine sind beispielsweise auch die in der EP-B-576 943, Seite 3, Zeile 9, bis Seite 5, Zeile 18,der EP-A-1 308 084, Seite 19, Zeile 47, bis Seite 20, Zeile 22, sowie die in der EP-B-576 527 auf Seite 9, Zeilen 47 bis 56 beschriebenen Lichtschutzmittel. Geeignete Lichtschutzmittel auf Basis sterisch gehinderter Amine sind auch im Handel erhältlich, wie z.B. Tinuvin® 123, Tinuvin® 292, Tinuvin® 144 und Tinuvin® 152 der Firma Ciba Spezialitätenchemie Holding AG Schweiz.

Beispiele für geeignete Antioxidantien sind alkylierte Monophenole, Alkylthiomethylphenole, Hydrochinione und alkylierte Hydrochinone, hydroxylierte Thiodiphenylether, Alkyliden-bisphenole, aromatische Hydroxybenzyl- Komponenten, Triazinkomponenten, Ester der beta-(3,5-di-tert.-butyl-4-hydroxyphenyl)propionsäure, Ester der beta-(5-tert.-butyl-4-hydroxy-3-methylphenyl)propionsäure, Acylaminophenole u.ä., beispielsweise die in der EP-B-576 527 auf Seite 7, Zeile 24, bis Seite 9, Zeile 25, der EP-A-1 308 084, Seite 16, Zeile 55, Bis Seite 19, Zeile 3, und der US-A-6,166,218, Spalte 21, Zeile 37, bis Spalte 23, Zeile 11, beschriebenen Antioxidantien.

Bevorzugt enthält die Grundierung (G) und/oder die pigmentierte Beschichtung (P) und/oder (P1) und/oder (P2) und/oder (Pn) den oder - im Falle einer Mischung aus zwei oder mehreren UV-Absorber - die UV-Absorber (UV1) mit einen Absorptionsmaximum von mindestens 370 nm in einer Menge von 0,1 bis 30,0 Gew.- %, bevorzugt 0,5 bis 20,0 Gew.- % und besonders bevorzugt in einer Menge von 0,5 bis 15, 0 Gew.- %, jeweils bezogen auf den Festkörpergehalt der Grundierung (G) bzw. den Festkörpergehalt des pigmentierten Beschichtungsmittels.

Bevorzugt enthält die Grundierung (G) und/oder die pigmentierte Beschichtung (P) und/oder (P1) und/oder (P2) und/oder (Pn) die weiteren Lichtschutzmittel in einer Menge von 0 bis 20,0 Gew.- %, bevorzugt 0 bis 12,0 Gew.- % und besonders bevorzugt in einer Menge von 0,1 bis 10, 0 Gew.- %, jeweils bezogen auf den Festkörpergehalt der Grundierung (G) bzw. den Festkörpergehalt des pigmentierten Beschichtungsmittels.

### Grundierung (G)

Zur Herstellung der erfindungsgemäßen Mehrschichtlackierung sind alle üblicherweise eingesetzten Grundierungen, insbesondere Grundierungen, die üblicherweise zur Beschichtung metallischer Substrate eingesetzt werden, geeignet. Werden die erfindungsgemäßen Mehrschichtlackierungen zur Beschichtung anderer Substrate, wie z.B. von Kunststoffen, eingesetzt, werden die für die Grundierung dieser Substrate üblichen Beschichtungsmittel eingesetzt.

Die insbesondere für Stahl und ähnliche Metalle eingesetzten Grundierungen sind üblicherweise wässrige Beschichtungsmittel mit einem Festkörpergehalt von im Allgemeinen 10 bis 25 Gew.- %. Sie enthalten im Allgemeinen mindestens ein Bindemittel, mindestens ein Vernetzungsmittel, ggf. Pigmente und ggf. weitere übliche Hilfs- und Zusatzstoffe. Bevorzugt werden elektrophoretisch abscheidbare Beschichtungsmittel, sogenannte Elektrotauchlacke, insbesondere kathodisch abscheidbare Elektrotauchlacke, als Grundierung eingesetzt. Geeignet sind aber auch beispielsweise mittels des sogenannten Coil-Coating-Verfahrens aufgebrachte Grundierungen. Für Substrate aus Aluminium werden meist durch anodische Oxidation erzeugte Aluminiumoxidschichten als Grundierungen (G) verwendet.

Die Elektrotauchlacke enthalten Bindemittel, die ionische oder in ionische Gruppen überführbare Substituenten sowie zur chemischen Vernetzung fähige Gruppen tragen. Die ionischen Gruppen können anionische oder in anionische Gruppen überführbare Gruppen, z.B. COOH-Gruppen, oder kationische Gruppen oder in kationische Gruppen überführbare Gruppen, z.B. Amino-, Ammonium-, quatäre Ammonium-, Phosphonium- und/oder Sulphonium-Gruppen sein. Bevorzugt werden Bindemittel mit basischen Gruppen, insbesondere stickstoffhaltige basische Gruppen eingesetzt. Diese Gruppen können quaternisiert vorliegen oder sie werden mit üblichen Neutralisationsmitteln, z.B. organischen Monocarbonsäuren, wie z.B. Ameisen-, Essig- oder Milchsäure, in ionische Gruppen überführt.

Geeignete anodisch abscheidbare Elektrotauchlacke sind bekannt und beispielsweise in der DE-A-28 24 418 beschrieben. Sie enthalten üblicherweise selbst- oder fremdvernetzende Bindemittel auf Basis von Polyestern, Epoxidharzen, Poly(meth)acrylaten, Maleinatölen oder Polybutadienölen, die anionische Gruppen, wie -COOH, -SO3H und/oder -PO3H2-Gruppen tragen, sowie übliche Vernetzer, wie z.B. Triazinharze, blockierte Polyisocyanate oder Vernetzer, die umesterungsfähige Gruppen tragen.

Geeignete kathodisch abscheidbare Elektrotauchlacke sind ebenfalls bekannt und beispielsweise in der EP-B 0241476, WO 91/09917, EP-B-0920 480, EP-B 0961 797, WO2003/068418 und WO2004/018580 beschrieben. Sie enthalten üblicherweise selbst- oder fremdvernetzende Bindemittel auf Basis von Polyestern, Epoxidharzen, Epoxidharzen mit endständigen Doppelbindungen oder OH-Gruppen, Poly(meth)acrylaten, Polyurethanharzen oder Polybutadienharzen, die kationische Gruppen, wie primäre, sekundäre oder tertiäre Aminogruppen, die mit einer organischen Säure neutralisiert sind, tragen, sowie übliche Vernetzer, wie z.B. Triazinharze, blockierte Polyisocyanate, Aminoplastharze, Polyepoxidverbindungen oder Vernetzer, die umesterungsfähige Gruppen oder Doppelbindungen tragen.

Bevorzugt werden die in der EP-B-0961 797 beschriebenen kathodisch abscheidbaren Elektrotauchlacke eingesetzt, die eine wässrige Bindemittel-Dispersion auf der Basis ammoniumgruppenhaltiger Epoxidharze enthalten, die erhältlich sind durch
(I) Umsetzung eines oder mehrerer Diepoxidharze (a) mit einem oder mehreren Mono- und/oder Diphenolen (b) zu einem Zwischenprodukt (I),
(II) Umsetzung des Zwischenproduktes (I) mit einem oder mehreren Aminen zu einem Epoxid-Amin-Addukt (A),
(III) anschließende oder gleichzeitige Umsetzung der sekundären Hydroxylgruppen, die bei der Umsetzung von (a) und (b) gebildet werden, mit den Epoxidgruppen des Epoxid-Amin-Adduktes (A),
(IV) Zusatz mindestens eines Vernetzungsmittels,
(V) Neutralisation und
(VI) Dispergierung der erhaltenen Mischung in Wasser.

### Pigmentierte Beschichtungen (P), (P1), (P2) bis (Pn)

Die erfindungsgemäß eingesetzten pigmentierten Beschichtungen (P), (P1), (P2) bis (Pn) können unter Verwendung sowohl wässriger als auch lösemittelhaltiger Beschichtungsmittel (B) hergestellt worden sein, die im Allgemeinen physikalisch oder thermisch und/oder mit aktinischer Strahlung härtbar sind. Die Beschichtungsmittel (B) enthalten üblicherweise
(I) ein oder mehrere Lösemittel und/oder Wasser
(II) ein oder mehrere Bindemittel, bevorzugt ein oder mehrere Polyurethanharze und/oder Acrylatharze und/oder Polyesterharze, besonders bevorzugt mindestens ein Polyurethanharz,
(III) ggf. mindestens ein Vernetzungsmittel,
(IV) ein oder mehrere Pigmente,
(V) ggf. den erfindungsgemäß eingesetzten UV-Absorber (UV1), der ein Absorptionsmaximum von mindestens 370 nm aufweist, sowie
(VI) ggf. ein oder mehrere übliche Hilfs- und Zusatzstoffe.

Als Bindemittel geeignet sind dabei die in Basislacken im Bereich der Automobilindustrie üblicherweise eingesetzten Polyurethanharze, Acrylatharze und Polyesterharze, wobei in dem Fachmann bekannter Weise über die Auswahl der Art und Menge der zur Herstellung dieser Bindemittel eingesetzten Aufbaukomponenten die Eigenschaften und damit die Eignung der Bindemittel für das erfindungsgemäße Verfahren gesteuert wird.

Bevorzugt eingesetzt werden Polyurethanharze, ggf. in Kombination mit einem oder mehreren Polyacrylatharzen und/oder mit einem oder mehreren Polyesterharzen.

Die Polyurethanharze werden in den Fachmann bekannter Weise erhalten durch Umsetzung
- mindestens eines Polyols, ausgewählt aus der Gruppe, bestehend aus Polyester- und Polyetherpolyolen, bevorzugt mit einem zahlenmittleren Molekulargewicht von 400 bis 5.000, und
- mindestens eines Polyisocyanates sowie
- gegebenenfalls mindestens einer Verbindung, enthaltend mindestens eine isocyanatreaktive funktionelle Gruppe und mindestens eine (potentiell) anionische Gruppe im Molekül
- gegebenenfalls mindestens einer weiteren Verbindung, enthaltend mindestens eine isocyanatreaktive funktionelle Gruppe und
- gegebenenfalls mindestens einer Verbindung eines zahlenmittleren Molekulargewichts von 60 bis 600 Dalton, enthaltend Hydroxyl- und/oder Aminogruppen im Molekül
und im Falle der für wässrige Beschichtungsmittel eingesetzten Polyurethanharze Neutralisation des resultierenden Reaktionsprodukts. Derartige Polyurethanharze sind beispielsweise in der EP-B-228 003 und der EP-B-574 417 beschrieben.

Derartige Polyurethanharze werden beispielsweise erhalten, indem als Isocyanatkomponente im Bereich der Lackindustrie üblicherweise eingesetzte Isocyanate, wie z.B. Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, Isophorondiisocyanat, 2-Isocyanatopropylcyclohexylisocyanat, Dicyclohexylmethan-2,4-diisocyanat, Dicyclohexylmethan-4,4'-diisocyanat, 1,4- oder 1,3-Bis(isocyanatomethyl)cyclohexan, 1,4-oder 1,3- oder 1,2-Diisocyanatocyclohexan, 2,4- oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyana-to-4-isocyanatomethyl-heptan oder 1-Isocyanato-2-(3-isocyanatopropyl)-cyclohexan oder Tetramethylxylylendiisocyanaten (TMXDI) oder Mischungen aus diesen Polyisocyanaten, bevorzugt Tetramethylxylylendiisocyanaten (TMXDI) und/oder Isophorondiisocyanat, bevorzugt Isophorondiisocyanat, verwendet werden.

Als Kettenverlängerungsmittel mit Hydroxyl- bzw. Aminogruppen werden bevorzugt Trimethylolpropan und Diethanolamin eingesetzt.

Zusammen oder anstelle der genannten Polyurethanharze sind als Bindemittel in den pigmentierten Beschichtungsmitteln auch sogenannte acrylierte Polyurethanharze geeignet, die in dem Fachmann bekannter Weise erhältlich sind, indem ethylenisch ungesättigte Monomere in Gegenwart eines Polyurethanharzes polymerisiert werden. Dabei ist es möglich, Polyurethanharze ohne Doppelbindungen und/oder Polyurethanharze mit Doppelbindungen einzusetzen.

Besonders bevorzugt werden als Bindemittel acrylierte Polyurethanharze mit seitenständigen und/oder endständigen Doppelbindungen, insbesondere mit seiten- und/oder endständigen Ethenylarylengruppen, eingesetzt.

Die acrylierten Polyurethanharze mit seitenständigen und/oder endständigen Doppelbindungen können erhalten werden durch Umsetzung eines Polyurethanpräpolymers (I-1), das mindestens eine freie Isocyanatgruppe enthält, mit einer Verbindung (I-2), die mindestens eine ethylenisch ungesättigte Doppelbindung und eine gegenüber NCO-Gruppen reaktive Gruppe, insbesondere eine Hydroxylgruppe oder eine Aminogruppe, aufweist.

Die acrylierten Polyurethanharze mit seitenständigen und/oder endständigen Doppelbindungen können auch erhalten werden durch Umsetzung eines Polyurethanpräpolymers (II-1), das mindestens eine gegenüber NCO-Gruppen reaktive Gruppe, insbesondere mindestens eine Hydroxylgruppe oder eine Aminogruppe, enthält, mit einer Verbindung (II-2), die mindestens eine ethylenisch ungesättigte Doppelbindung und eine freie Isocyanatgruppe aufweist.

Als Bindemittel besonders bevorzugt eingesetzt werden außerdem Propfmischpolymerisate, die erhältlich sind durch Polymerisation von olefinisch ungesättigten Monomeren in Gegenwart der acrylierten Polyurethanharze mit seitenständigen und/oder endständigen Doppelbindungen.

Insbesondere werden Pfropfmischpolymerisate, die einen hydrophoben Kern aus mindestens einem einpolymerisierten olefinisch ungesättigten Monomeren und eine hydrophile Schale aus mindestens einem hydrophilen acrylierten Polyurethan umfassen, eingesetzt. Geeignet sind aber auch Pfropfmischpolymerisate, die einen hydrophoben Kern aus mindestens einem hydrophoben acrylierten Polyurethan und eine hydrophile Schale aus mindestens einem einpolymerisierten olefinisch ungesättigten Monomeren umfassen.

Geeignete acrylierte Polyurethanharze sowie daraus hergestellte Propfmischpolymerisate sind beispielsweise in der WO01/25307, Seite 5, Zeile 14, bis Seite 45, Zeile 4, und der EP-B-787 159, Seite 2, Zeile 27, bis Seite 7, Zeile 13, beschrieben.

Die beschriebenen Polyurethanharze können ggf. in Kombination mit einem oder mehreren Polyacrylatharzen und/oder mit einem oder mehreren Polyesterharzen eingesetzt werden.

Geeignete Polyesterharze können gesättigt oder ungesättigt, insbesondere gesättigt sein und weisen im Allgemeinen ein zahlenmittleres Molekulargewicht von 400 bis 5000 auf und sind beispielsweise in der EP-B-787 159, Seite 4, Zeilen 26 bis 53, beschrieben.

Der Gehalt des Beschichtungsmittels (B) an Bindemittel beträgt im Allgemeinen, jeweils bezogen auf den Festkörpergehalt des Beschichtungsmittels (B), 10 bis 99, bevorzugt 30 bis 90 Gew.- %.

Der Gehalt des Beschichtungsmittels (B) an Vernetzungsmittel beträgt im Allgemeinen, jeweils bezogen auf den Festkörpergehalt des Beschichtungsmittels (B), 0 bis 55, bevorzugt 5 bis 40 Gew.- %.

Als ggf. eingesetztes Vernetzungsmittel enthalten die pigmentierten Beschichtungsmittel insbesondere freie Isocyanate oder blockierte Isocyanate und/oder Aminoplastharze.

Als Isocyanat kommen dabei prinzipiell die bei der Beschreibung der Polyurethanharze genannten, im Bereich der Lackindustrie üblicherweise eingesetzte Isocyanate in Betracht, bevorzugt TACT und Dimethylpyrazol-blockiertes trimeres Hexamethylendiisocyanat sowie im Falle der 2-Komponenten-Beschichtungsmittel trimeres Hexamethylendiisocyanat.

Als Blockierungsmittel kommen alle üblicherweise eingesetzten Blockierungsmittel, wie die entsprechenden Alkohole, Amine, Ketone, Pyrazole u.a. in Frage, bevorzugt Blockierungsmittel mit einer Deblockierungstemperatur kleiner 130 °C.

Geeignet sind prinzipiell die im Bereich der Lackindustrie üblicherweise eingesetzten Aminoplastharze, wobei über die Reaktivität der Aminoplastharze die Eigenschaften der pigmentierten Beschichtungsmittel gesteuert werden können. Bevorzugt werden mit Butanol veretherte Aminoplastharze, beispielsweise das im Handel erhältliche Cymel ® 203, eingesetzt.

Das pigmentierte Beschichtungsmittel kann außerdem ggf. noch vernetzte Mikroteilchen, wie sie beispielsweise in der EP-A-543 817 beschrieben sind, enthalten. Sie können insbesondere zur Steuerung des Verlaufs und des Abdunstverhaltens eingesetzt werden.

Das pigmentierte Beschichtungsmittel enthält außerdem mindestens ein Pigment. Vorzugsweise wird das Pigment aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Beispiele geeigneter Effektpigmente, die auch farbgebend sein können, sind Metallplättchenpigmente, wie handelsübliche Aluminiumbronzen, gemäß DE 36 36 183 A1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente« verwiesen.

Geeignete organische und/oder anorganische farbgebende Pigmente sind die in der Lackindustrie üblicherweise eingesetzten Pigmente.

Der Gehalt des Beschichtungsmittels (B) an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in den Beschichtungsmitteln (B). Vorzugsweise liegt der Pigmentgehalt im Falle von Unilacken, jeweils bezogen auf den Festkörpergehalt des Beschichtungsmittels (B), bei 0,5 bis 70, bevorzugt 1,0 bis 60 Gew.- %. Vorzugsweise liegt der Pigmentgehalt im Falle von Metalliclacken, jeweils bezogen auf den Festkörpergehalt des Beschichtungsmittels (B), bei 0,5 bis 40, bevorzugt 0,5 bis 35, besonders bevorzugt bei 1 bis 30 Gew.- %.

Außer den vorstehend beschriebenen Pigmenten kann das Beschichtungsmittel (B) bzw. (B1) bis (Bn) übliche und bekannte Hilfs- und Zusatzstoffe, wie organische und anorganische, transparente und deckende Füllstoffe, und Nanopartikel sowie weitere übliche Hilfs- und Zusatzstoffe in üblichen Mengen, bevorzugt 0 bis 40 Gew.- %, bezogen auf das Beschichtungsmittel (B), enthalten.

Im Falle einer mehrschichtigen pigmentierten Beschichtung kann dabei die Schicht (P1) im Vergleich zu den nachfolgenden pigmentierten Schichten (P2) bis (Pn) noch weitere Additive, insbesondere Additive zur Erzielung von Füllereigenschaften, wie beispielsweise elastomere Teilchen, Talkum u.ä. enthalten.

Wie bereits bei der Beschreibung der Mehrschichtlackierungen oben ausgeführt, enthält bevorzugt das bzw. die pigmentierte(n) Beschichtungsmittel den erfindungsgemäß eingesetzten UV-Absorber (UV1), der ein Absorptionsmaximum von mindestens 370 nm aufweist.

### Transparentes Beschichtungsmittel (T) zur Herstellung der transparenten Beschichtung (K)

Zur Herstellung der erfindungsgemäßen Mehrschichtlackierung sind alle üblicherweise eingesetzten transparenten Beschichtungsmittel geeignet, wie beispielsweise üblicherweise eingesetzte wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry- Klarlacke. Die eingesetzten transparenten Beschichtungsmittel können thermisch und/oder mittels Strahlung, insbesondere mittels UV-Strahlung, härtbar sein.

Die transparenten Beschichtungsmittel enthalten üblicherweise mindestens ein Bindemittel mit funktionellen Gruppen sowie mindestens einen Vernetzer mit einer zu den funktionellen Gruppen des Bindemittels komplementären Funktionalität. Beispiele für solche komplementären Funktionalitäten sind insbesondere Carboxyl/Epoxy, Amin oder Thiol oder Hydroxyl/blockiertes oder freies Isocyanat oder alkoxylierte Aminogruppen oder umesterungsfähige Gruppen, (Meth)Acryloyl/CH-acide oder Amin oder Hydroxyl oder Thiol, Carbamat/ alkoxylierte Aminogruppen und (Meth)Acryloyl/(Meth)Acryloyl.

Eingesetzt werden insbesondere transparente Beschichtungsmittel auf Basis von Polyurethanharzen und/oder Polyacrylatharzen und/oder Polyesterharzen, bevorzugt mit Hydroxyl-, Amino-, Carbamat-, Carboxyl-, (Meth)acryloyl- und/oder Thiolgruppen in Kombination mit den entsprechenden Vernetzern, insbesondere in Kombination mit Isocyanaten, Aminoplastharzen, Anhydriden u.ä.

Neben dem Bindemittel und Vernetzer enthalten die transparenten Beschichtungsmittel übliche Hilfs- und Zusatzstoffe, wie beispielsweise Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, vorzugsweise die oben beschriebenen UV-Absorber mit einem Absortionsmaximum unter 370 nm und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden.

### Verfahren zur Herstellung der Mehrschichtlackierung

Die erfindungsgemäße Mehrschichtlackierung kann auf beliebige Substrate aufgebracht werden. Die Substrate können aus den unterschiedlichsten Materialien und Kombinationen von Materialien aufgebaut sein. Vorzugsweise bestehen sie aus Metallen, Kunststoffen, Glas, Holz, Leder, Textil, Keramik oder Naturstein, bevorzugt aus Metallen, Kunststoffen und Glas, insbesondere aus Metallen und Kunststoffen.

Die Grundierung wird mit den üblichen Verfahren, wie Tauchen, Rakeln, Spritzen, Walzen o.ä., insbesondere aber mittels der Elektrotauchlackierung appliziert. Bevorzugt wird die Grundierung zumindest teilweise oder vollständig ausgehärtet, ehe das bzw. die pigmentierte(n) Beschichtungsmittel appliziert werden. Die Aushärtung der Grundierung erfolgt üblicherweise durch Erhitzen auf eine Temperatur zwischen 80 und 170 °C für eine Zeit von 3 bis 30 min.

Das ggf. aufgebrachte transparente Beschichtungsmittel (T) wird ebenso wie das pigmentierte Beschichtungsmittel (B) mittels üblicher Verfahren zur Applikation von flüssigen Beschichtungsmitteln, wie beispielsweise Tauchen, Rakeln, Spritzen, Walzen o.ä., insbesondere aber mittels Spritzen, appliziert.

Im Falle von Mehrschichtlackierungen mit mehr als einem pigmentierten Beschichtungsmittel (B1) bis (Bn) wird das untere pigmentierte Beschichtungsmittel bzw. die unteren pigmentierten Beschichtungsmittel (Bn-1) vorteilhaft mit Hilfe der elektrostatischen Spritzapplikation (ESTA), vorzugsweise mit Hochrotationsglocken, und das obere pigmentierte Beschichtungsmittel (B2) bzw. (Bn) mit Hilfe der pneumatischen Spritzapplikation appliziert.

Im Falle von Mehrschichtlackierungen mit mehr als einem pigmentierten Beschichtungsmittel wird das untere pigmentierte Beschichtungsmittel (B1) bzw. alle unteren Schichten vorteilhaft jeweils sofort mit dem nächsten pigmentierten Beschichtungsmittel (B2) bzw. (B3) usw. bis (Bn) beschichtet, ohne dass zwischen Applikation der einzelnen pigmentierten Beschichtungsmittel zwischengetrocknet wird. Es kann daher im Gegensatz zu den herkömmlichen Verfahren in der Lackierstrasse auf eine separate Trockenstation, wie z.B. einen Blastunnel, verzichtet werden.

Je nach Ausgestaltung der eingesetzten Lackieranlage können also alle pigmentierten Schichten ohne zwischenzeitlichen flash-off appliziert werden. Bevorzugt wird aber mit einem kurzen Ablüften, bevorzugt bei Umgebungstemperatur von i.A. < 30 °C während einer Zeit von < 3 Minuten, insbesondere mit einem anlagenbedingten Ablüften, wie durch die oben beschriebene Verwendung zweier separater Applizierstationen, gearbeitet.

Es ist ferner auch möglich, zwischen der Applikation der einzelnen pigmentierten Beschichtungen zu trocknen oder teilweise zu härten.

Sofern noch ein transparentes Beschichtungsmittel (T) appliziert wird, wird bzw. werden bevorzugt die pigmentierte Beschichtung (P) bzw. die pigmentierten Beschichtungen (P1) bis (Pn), kurz abgelüftet oder kurz getrocknet, im Allgemeinen bei einer Temperatur zwischen 30 und kleiner 100 °C für eine Zeit von 1 bis 15 min. Danach wird das transparente Beschichtungsmittel appliziert.

Die applizierten Schichten (P1), (P2) bis (Pn) und ggf. (K) werden gemeinsam thermisch gehärtet. Sofern das transparente Beschichtungsmittel (T) auch noch mit aktinischer Strahlung härtbar ist, erfolgt noch eine Nachhärtung durch Bestrahlung mit aktinischer Strahlung. Sofern die gegebenenfalls verwendete Grundierung (G) noch nicht gehärtet ist, wird sie in diesem Verfahrenschritt mit ausgehärtet.

Die Aushärtung kann nach einer gewissen Ruhezeit erfolgen. Sie kann eine Dauer von 30 Sekunden bis 2 Stunden, vorzugsweise 1 Minute bis 1 Stunde und insbesondere 1 bis 45 Minuten haben. Die Ruhezeit dient beispielsweise zum Verlauf und zur Entgasung der Lackschichten oder zum Verdunsten von flüchtigen Bestandteilen. Die Ruhezeit kann durch die Anwendung erhöhter Temperaturen bis 90 °C und/oder durch eine reduzierte Luftfeuchte < 10 g Wasser/kg Luft unterstützt und/oder verkürzt werden, sofern hierbei keine Schädigungen oder Veränderungen der Lackschichten eintreten, etwa eine vorzeitige vollständige Vernetzung.

Die Aushärtung erfolgt üblicherweise bei einer Temperatur zwischen 90 und 160 °C während einer Zeit von 15 bis 90 min.

Für die Trocknung bzw. Konditionierung der nassen pigmentierten Beschichtungen (P) bzw. (P1) bis (Pn) sowie ggf. der nassen transparenten Beschichtung (K) werden bevorzugt thermische und/oder Konvektionsverfahren verwendet, wobei übliche und bekannten Vorrichtungen, wie Durchlauföfen, NIR- und IR-Heizstrahler, Gebläse und Blastunnel, eingesetzt werden. Diese Vorrichtungen können auch miteinander kombiniert werden.

Bei den erfindungsgemäßen Mehrschichtlackierungen weist die Grundierung (G) im Allgemeinen eine Trockenfilmschichtdicke von 8 bis 60 µm, bevorzugt von 10 bis 40 µm, und - falls vorhanden - die transparente Beschichtung (K) im Allgemeinen eine Trockenfilmschichtdicke von 8 bis 80 µm, bevorzugt von 10 bis 70 µm, insbesondere 10 bis 60 µm, auf.

Im Falle der Mehrschichtlackierungen mit nur einer pigmentierten Beschichtung (P) weist die Beschichtung (P) im Allgemeinen eine Trockenfilmschichtdicke von 6 bis 100 µm, bevorzugt von 8 bis 80 µm ,und insbesondere 10 bis 60 µm, auf.

Im Falle der Mehrschichtlackierungen mit zwei pigmentierten Beschichtungen (P1) und (P2) weist im Allgemeinen die pigmentierte Beschichtung (P1) eine Trockenfilmschichtdicke von 6 bis 40 µm, bevorzugt von 6 bis 30 µm, insbesondere von 8 bis 25 µm, und/oder die pigmentierte Beschichtung (P2) eine Trockenfilmschichtdicke von 3 bis 40 µm, bevorzugt von 3 bis 30 µm, insbesondere von 3 bis 20 µm, auf.

Die zweite Basislackschicht kann dabei auch nur eine sehr geringe Schichtdicke unterhalb des Deckvermögens, bevorzugt eine Schichtdicke von 40 bis 70% der Schichtdicke, die zur Erzielung des Deckvermögens erforderlich wäre, aufweisen. Es ist daher beispielsweise erfindungsgemäß möglich, dass bei Verwendung von transparenten Beschichtungsmitteln die zweite Basislackschicht nur eine Schichtdicke von 6 bis 8 µm im Falle von Metalliclackierungen und von ca. 11 µm im Falle anderer Uni-Lackierungen, aufweist, wobei je nach verwendeter Applikationsmethode allerdings auch höhere Schichtdicken möglich sind, obwohl es von dem Deckvermögen und der Farbgebung nicht erforderlich ist.

Sofern die erfindungsgemäßen Mehrschichtlackierungen eine transparente Beschichtung (K) aufweisen, ist im Allgemeinen die Trockenfilmschichtdicke der pigmentierten Beschichtung (P) bzw. der pigmentierten Beschichtungen (P1) und (P2) niedriger als bei Verzicht auf die transparente Beschichtung (K). Bevorzugt weist dann die pigmentierte Beschichtung (P1) eine Trockenfilmschichtdicke von 6 bis 25 µm, bevorzugt von 8 bis 16 µm, und/oder die pigmentierte Beschichtung (P2) eine Trockenfilmschichtdicke von 3 bis 20 µm, bevorzugt von 3 bis 10 µm, auf.

### Verwendung der Mehrschichtlackierung

Die erfindungsgemäßen Mehrschichtlackierungen werden insbesondere im Bereich der Automobilserienlackierung, aber auch im Bereich der Nutzfahrzeug- und der Autoreparatur- Lackierung eingesetzt, und zwar für die Beschichtung von Kraftfahrzeugkarossen oder von Karosserie-Innenbauteilen oder Karosserie-Außenbauteilen. Sie sind aber auch für andere Bereiche geeignet, wie beispielsweise für die Beschichtung von Bauteilen für den Schiff- und Flugzeugbau oder von Bauteilen für Haushalts- und Elektrogeräte oder deren Teilen.

### Beispiele

### 1.1. Herstellung der Pigmentpasten PP1 bis PP3

Die Pigmentpaste PP1 wird dadurch erhalten, dass entsprechend nachfolgender Tabelle 1 die Polyurethandispersion gemäß EP-B-787 159, Seite 8, Polyurethandispersion B, vorgelegt und unter schnellem Rühren Polypropylenglykol, Pigment Paliogenblau L 6482 ,deionisiertes Wasser und eine Neutralisationslösung (Dimethylethanolamin 10% in Wasser) zugegeben werden. Die Rührzeit beträgt eine Stunde. Nach dem Rühren wird die Mischung mit einer handelsüblichen Labormühle gemahlen, bis die Feinheit gemessen nach Hegman <12 µm beträgt. Abschließend wird mit dem Neutralisationslösung (Dimethylethanolamin 10% in Wasser) auf einen pH-Wert von 7,8-8,2 eingestellt.

**Tabelle 1**

| | |
|---|---|
| Polyurethandispersion | 66,5 |
| Polypropylenglykol | 1,7 |
| deionisiertes Wasser | 13,9 |
| Pigment Paliogenblau L6482 | 16,5 |
| Neutralsisationslösung | 1,4 |

Die Pigmentpaste PP2 wird dadurch erhalten, dass entsprechend nachfolgender Tabelle 2 die Polyurethandispersion gemäß EP-B-787 159, Seite 8, Polyurethandispersion B, und der Polyester gemäß EP-B-787 159, Seite 8, Polyesterharzlösung A, vorgelegt und unter schnellem Rühren Polypropylenglykol, Butyldiglykol, Pigment Russ FW2, deionisiertes Wasser und eine Neutralisationslösung (Dimethylethanolamin 10% in Wasser) zugegeben werden. Die Rührzeit beträgt eine Stunde. Nach dem Rühren wird die Mischung mit einer handelsüblichen Labormühle gemahlen, bis die Feinheit gemessen nach Hegman <12 µm beträgt. Abschließend wird der mit der Neutralisationslösung (Dimethylethanolamin 10% in Wasser) auf einen pH-Wert von 7,8-8,2 eingestellt.

**Tabelle 2**

| | |
|---|---|
| Polyurethandispersion | 58,9 |
| Polyester | 5 |
| Polypropylenglykol | 2,2 |
| Butyldiglykol | 7,6 |
| deionisiertes Wasser | 8,4 |
| Russ FW2 | 10,1 |
| Neutralsisationslösung | 7,8 |

Die Pigmentpaste PP3 wird dadurch erhalten, dass entsprechend nachfolgender Tabelle 3 die Polyurethandispersion gemäß EP-B-787 159, Seite 8, Polyurethandispersion B, vorgelegt und unter schnellem Rühren Polypropylenglykol, Butyldiglykol, Pigment Hostapermrosa E, deionisiertes Wasser und eine Neutralisationslösung (Dimethylethanolamin 10% in Wasser) zugegeben wird. Die Rührzeit beträgt eine Stunde.

Nach dem Rühren wird die Mischung mit einer handelsüblichen Labormühle gemahlen, bis die Feinheit gemessen nach Hegman <12 µm beträgt. Abschließend wird der Basislack mit dem Neutralisationslösung (Dimethylethanolamin 10% in Wasser) auf einen pH-Wert von 7,8-8,2 eingestellt.

**Tabelle 3**

| | |
|---|---|
| Polyurethandispersion | 45,2 |
| Polypropylenglykol | 2,6 |
| Butyldiglykol | 6,3 |
| deionisiertes Wasser | 21,3 |
| Hostapermrosa E | 24 |
| Neutralsisationslösung | 0,6 |

### 1.2. Herstellung des Lichtschutzmittels mit einem Absorptionsmaximum von über 370 nm

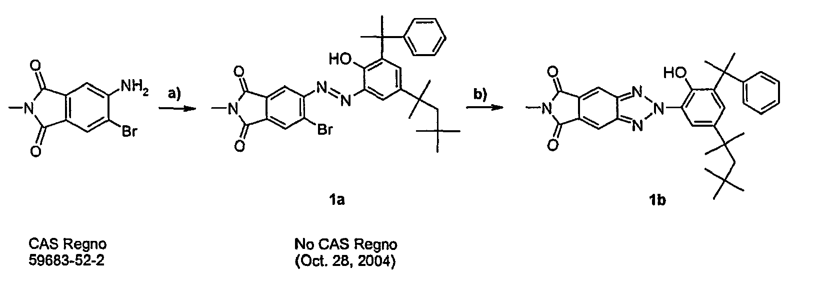

**a)** Nitrosylschwefelsäure (40% in Schwefelsäure; 14.0g, 44.1mmol) wird langsam bei 15°C zu einer gerührten Suspension von 4-Amino-5-bromophtalimid (95%; 10.7g, 39.9mmol) in Essigsäure (200ml) zugegeben. Während der Zugabe wird die Temperatur mit Hilfe eines Eisbades zwischen 15°C und 17°C gehalten. Nachdem die Zugabe vollständig ist (45 min), wird für 2 h weiter gerührt. Die Reaktionsmischung wird dann in einen Tropftrichter überführt und langsam bei 15 °C in eine gerührte Lösung von 2-Cumyl-4-t-octylphenol (95%; 13.7g, 40.1mmol) in Methanol / m-Xylol (85 / 15 Volumenteile; 200ml) enthalten NaOH-Microprills (1.8g, 45.0mmol) und Natriumacetat (13.1 g, 159.7mmol) zugegeben. Während der Zugabe wird die Temperatur mit Hilfe eines Isopropanol - Trockeneisbades zwischen -15°C und -9°C gehalten. Der pH-Wert wird mit Hilfe einer Elektrode gemessen und durch Zugabe von NaOH (30% in Wasser; insgesamt 250ml) bei 5 gehalten. Nachdem die Zugabe vollständig ist (2 Stunden; Anfangs- pH 13.7, End- pH 5.6), wird das Eisbad entfernt und die resultierende Suspension über Nacht gerührt. Wasser (150ml) und Toluol (250ml) werden zugegeben, die Wasserphase abgetrennt und mit Toluol (1x250ml) gewaschen. Die vereinigten organischen Phasen werden mit Wasser (2x250ml) gewaschen, getrocknet (MgSO₄), gefiltert und das Lösemittel entfernt. Es werden 30g eines roten Öls erhalten. Methanol (60g) wird zugegeben und die Suspension wird zum Rückflußsieden erhitzt. Durch Kühlen (Eisbad) kristallisiert die Komponente 1 a als roter Feststoff aus, der filtriert, mit Methanol gewaschen und getrocknet wird. Ausbeute 16.2g (27.4mmol, 68.8%). Schmelzpunkt: 178 - 179°C.
   ¹H-NMR (300MHz, CD₂Cl₂), δ(ppm): 13.14 (s, 1H), 8.34 (s, 1H), 8.18 (s, 1 H), 7.92 (d-like, 1 H), 7.76 (d-like, 1 H), 7.28 - 7.24 (m, 4H), 7.20 - 7.15 (m, 1 H), 3.20 (s, 3H), 1.87 (s, 2H), 1.82 (s, 6H), 1.51 (s, 6H), 0.86 (s, 9H).
**b)** Eine gerührte Mischung der Komponente 1a (17.2g, 29.1mmol), Natriumazid (99%; 2.5g, 38.1mmol) und 1-Methyl-2-pyrrolidinon (60ml) wird auf 120 °C erhitzt. Die Temperatur wird gehalten, bis die Freisetzung von Stickstoff abgeschlossen aufhört (1.5 Stunden). Die dunkele Lösung wird auf 25 °C abgekühlt und dann werden Wasser (100ml) und Toluol (150ml) zugegeben. Die wässrige Phase wird abgetrennt und mit Toluol (1x50ml) gewaschen. Die vereinigten organischen Phasen werden mit Wasser (3x50ml) gewaschen, getrocknet (MgSO₄), gefiltert und das Lösemittel entfernt. Durch Stehenlassen werden 17g eines viskosen roten Öls erhalten. Dieses Rohmaterial wird in heißem Toluol gelöst. Hexan wird zugegeben und während des Kühlen kristallisiert die Komponente 1 b als gelber Feststoff aus, der abfiltriert und getrocknet wird (8g). Das Filtrat wird eingedampft und der Rest kristallisiert aus Hexan aus und liefert weitere 3,5g der Komponente 1 b. Ausbeute 11.5g (21.9mmol, 75.3%).
   Schmelzpunkt: 198 - 199°C.
   ¹H-NMR (300MHz, CD₂Cl₂), δ(ppm): 10.97 (s, 1H), 8.40 - 8.39 (m, 3H), 7.76 (d-like, 1 H), 7.31 - 7.24 (m, 4H), 7.20 - 7.15 (m, 1 H), 3.25 (s, 3H), 1.91 (s, 2H), 1.83 (s, 6H), 1.54 (s, 6H), 0.86 (s, 9H).

### 1.3. Herstellung des wässrigen Metallic-Basislackes 1

25,0 Teile einer Paste eines synthetischen Natrium-Magnesium-Silikates mit Schichtstruktur der Firma Laporte (3%-ig in Wasser) werden vorgelegt und unter Rühren nacheinander mit
22,0 Teilen einer Polyurethandispersion gemäß EP-B-787 159, Seite 8, Polyurethandispersion B,
1,3 Teilen einer Polyesterharzlösung gemäß EP-B-787 159, Seite 8, Polyesterharzlösung A,
3,3 Teilen Butylglykol,
4,8 Teilen eines handelsüblichen Melaminharzes in Butanol (Maprenal VMF3924),
0,3 Teilen einer Neutralisationslösung (Dimethylethanolamin 10%-ig in Wasser),
4,0 Teilen eines polyurethanmodifiziertes Polyacrylates gemäß EP-B-787 159, Seiten 8 und 9, Polyacrylates D,
2,7 Teilen Isopropanol,
2,4 Teilen Ethylhexanol,
6,0 Teilen deionisiertem Wasser,
1,2 Teilen einer1:1-Mischung eines Polyurethanverdickers der Firma Henkel (Nopco DSX 1550) mit Butylglykol,
7,3 Teilen deionisiertes Wasser,
4,0 Teilen der Pigmentpaste PP1 basierend auf 66,5 Gew.- % Polyurethandispersion B und 16,5 Gew.- % Paliogenblau L6482,
1,6 Teilen der Pigmentpaste PP2 basierend auf 58,9 Gew.- % Polyurethandispersion B, 5 Gew.- % Polyester und 10,1 Gew.- % Farbruß FW2,
2,8 Teilen der Pigmentpaste PP3 basierend auf 45,2 Gew.- % Polyurethandispersion B und 24,0 Gew.- % Hostaperm-Rosa E und
2,0 Teilen deionisiertem Wasser versetzt.

Zu dieser Mischung wird unter Rühren eine Mischung bestehend aus 0,9 Teilen einer Polyesterharzlösung gemäß EP-B-787 159, Seite 8, Polyesterharzlösung A,
0,9 Teilen Butylglykol und
0,9 Teilen des Pigmentes Mearlin EXT. Super Violett 539Z
gegeben und mit 3,1 Teilen deionisiertem Wasser verdünnt.

Der so hergestellte Wasserbasislack wird mit deionisiertem Wasser auf eine Viskosität von 80-100mPas bei 1000 s-1 und mit einer 10%-igen wässrigen Dimethylethanolaminlösung auf einen pH-Wert von 7,7 - 8,0 eingestellt.

### 1.4. Herstellung des wässrigen Metallic-Basislackes 2

Der in Beispiel 1.3. hergestellte wässrige Metallic-Basislack 1 wird vor dem Einstellen mit deionisiertem Wasser und wässriger Dimethylethanolaminlösung mit 2%, bezogen auf das Gesamtgewicht des Basislackes 2, Tinuvin® 1130 der Firma Ciba Spezialitätenchemie Holding AG Schweiz versetzt.

### 1.5. Herstellung des erfindungsgemäßen wässrigen Metallic-Basislackes 3

Der in Beispiel 1.3. hergestellte wässrige Metallic-Basislack 1 wird vor dem Einstellen mit deionisiertem Wasser und wässriger Dimethylethanolaminlösung mit 2%, bezogen auf das Gesamtgewicht des Basislackes 2 des erfindungsgemäßen, im Beispiel 1.2. beschriebenen UV-Absorbers 1 b versetzt.

### 1.6. Herstellung der Mehrschichtlackierungen 1 bis 3

Für die Prüfung der Haftung nach Kurzbewitterung mittels Dampfstrahltest am Andreaskreuz wurden die Wasserbasislacke 1 - 3 mit einer Trockenfilmschichtdicke von 12 µm auf Prüftafeln appliziert, bestehend aus einem Stahlsubstrat (Karosserieblech), das mit einer üblichen und bekannten kathodisch abgeschiedenen und eingebrannten Elektrotauchlackierung beschichtet war (Cathoguard® 500 der BASF Coatings, (Trockenfilmschichtdicke 20 µm), 10 min bei 80°C vorgetrocknet, abgekühlt und mit einem handelsüblichen Zweikomponenten-Polyurethan-Klarlack (EverGloss der Firma BASF Coatings AG, Trockenfilmschichtdicke 35µm) überschichtet. Hiernach wurden die erhaltene Wasserbasislackschicht 1 bzw. 2 bzw. 3 und Klarlackschicht 30 min bei 130°C eingebrannt.

Von den so erhaltenen Mehrschichtlackierungen 1 bis 3 wurde die Haftung mittels Dampfstrahltest am Andreaskreuz (Prüfbedingungen: Zeit 60 sec, Druck 60 bar, Abstand 10 cm, Temperatur 67°C) bei UV-Belastung, insbesondere bei Belastung von 6000 Stunden im sogenannten WOM-CAM 180 Q/B- Test nach VDA-Prüfblatt (E) 621 - 430 Apr 97 und/oder SAE J1960 JUN89, untersucht.

### Prüfergebnisse:

| | WBL 1 | WBL 2 | WBL 3 |
|---|---|---|---|
| | Mehrschichtlackierung 1 | Mehrschichtlackierung 2 | Mehrschichtlackierung 3 |
| Dampfstrahlhaftung nach | | | |
| a) 3000h CAM 180 | 5* | 0 | 0 |
| b) 4000h CAM 180 | 5* | 0 | 0 |
| c) 5000h CAM 180 | 5* | 5* | 0 |
| d) 6000h CAM 180 | 5* | 5* | 0 |

| | | | |
|---|---|---|---|
| 0 = keine Beschädigung 5* = totale Delamination des Basislackes von der Elektrotauchlackierung | | | |

Die erfindungsgemäße Mehrschichtlackierung 3 mit dem erfindungsgemäßen Wasserbasislack 3 erfüllt als einzige die Testbedingungen und zeigt keinerlei Beschädigung.

### 1.7. Herstellung der Mehrschichtlackierungen 4 bis 6

Ein Stahlsubstrat (Karosserieblech) wurde mit einer üblichen und bekannten kathodisch abgeschiedenen und eingebrannten Elektrotauchlackierung (Cathoguard® 500 der BASF Coatings, Trockenfilmschichtdicke von 20 µm) versehen. Auf die so erhaltene Elektrotauchlackierung wurden die Wasserbasislacke 1 - 3 (Trockenfilmschichtdicke von 10 µm) appliziert, 2 min bei Raumtemperatur abgelüftet und mit einem zweiten Auftrag des Wasserbasislacks 1 (Trockenfilmschichtdicke von 5 µm) überschichtet, 10 min bei 80°C vorgetrocknet und abgekühlt. Abschließend wird mit einem handelsüblichen Zweikomponenten-Polyurethan-Klarlack (EverGloss® der Firma BASF Coatings AG ) überschichtet (Trockenfilmschichtdicke 35µm). Hiernach wurden die erhaltene Wasserbasislackschichten 4 bzw. 5 bzw. 6 und die Klarlackschicht 30 min bei 130°C eingebrannt.

Von den so erhaltenen Mehrschichtlackierungen 4 bis 6 wurde die Haftung mittels Dampfstrahltest am Andreaskreuz (Prüfbedingungen: Zeit 60 sec, Druck 60 bar, Abstand 10 cm, Temperatur 67°C) bei UV-Belastung, insbesondere bei Belastung von 6000 Stunden im sogenannten WOM-CAM 180 Q/B- Test nach VDA-Prüfblatt (E) 621 - 430 Apr 97 und/oder SAE J1960 JUN89, untersucht.

### Prüfergebnisse:

| | WBL1 + WBL1 | WBL2 + WBL1 | WBL3 + WBL1 |
|---|---|---|---|
| | Mehrschichtlackierung 4 | Mehrschichtlackierung 5 | Mehrschichtlackierung 6 |
| Dampfstrahlhaftung nach | | | |
| a) 3000h CAM 180 | 5* | 0 | 0 |
| b) 4000h CAM 180 | 5* | 0 | 0 |
| c) 5000h CAM 180 | 5* | 5* | 0 |
| d) 6000h CAM 180 | 5* | 5* | 0 |

| | | | |
|---|---|---|---|
| 0 = keine Beschädigung 5* = totale Delamination des Basislackes von der Elektrotauchlackierung | | | |

Der erfindungsgemäße Wasserbasislack 6 erfüllt als einziger die Testbedingungen und zeigt keinerlei Beschädigung.

## Patentansprüche

1. Effekt- und/oder farbgebende Mehrschichtlackierung aus mindestens einer Grundierung (G) und mindestens einer darauf angeordneten pigmentierten Beschichtung (P), **dadurch gekennzeichnet, dass** die pigmentierte Beschichtung (P) und/oder die Grundierung (G) mindestens einen UV-Absorber (UV1) enthält, der ein Absorptionsmaximum von mindestens 370 nm aufweist.

2. Mehrschichtlackierung nach Anspruch 1, **dadurch gekennzeichnet, dass** die pigmentierte Beschichtung (P) und/oder die Grundierung (G) mindestens einen UV-Absorber (UV1) enthält, der ein Absorptionsmaximum von 370 nm bis 450 nm, bevorzugt von 375 bis 450 nm, besonders bevorzugt von 378 nm bis 440 nm und ganz besonders bevorzugt von 378 bis 420 nm, aufweist.

3. Mehrschichtlackierung nach Anspruch 1 oder 2, **dadurch gekennzeichnet, dass** der UV-Absorber (UV1) die nachfolgend genannte Formel (I) oder (II), bevorzugt die Formel (I), aufweist 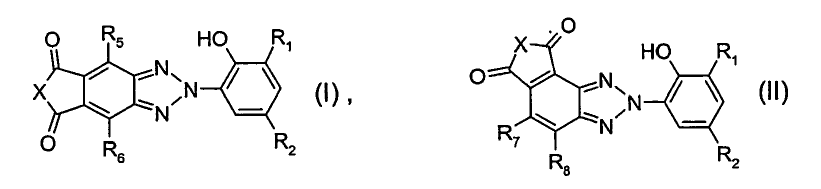 wobei
**R₁** Wasserstoff, ein verzweigter oder unverzweigter Alkylrest mit 1 bis 24 C-Atomen, ein verzweigter oder unverzweigter Alkenylrest mit 2 bis 18 C-Atomen, ein Cycloalkylrest mit 5 bis 12 C-Atomen, ein Phenylalkylrest mit 7 bis 15 C-Atomen, ein Phenylrest ist, oder dieser Phenyl- oder dieser Phenylalkylrest am Phenylring mit 1 bis 4 Alkylgruppen mit 1 bis 4 C-Atomen substituiert sein kann; oder wobei
**R₁** eine Gruppe 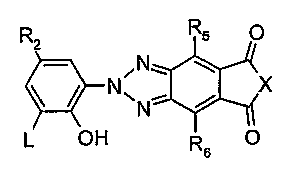 oder eine Gruppe 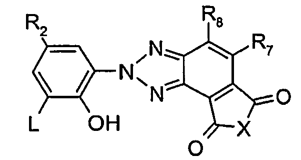 ist, wobei L ein Alkylenrest mit 1 bis 12 C-Atomen, ein Alkylidenrest mit 2 bis 12 C-Atomen, ein Benzylidenrest, ein p-Xylolrest oder ein Cycloalkylenrest mit 5 bis 7 C-Atomen ist;
**R₂** ein verzweigter oder unverzweigter Alkylrest mit 1 bis 24 C-Atomen, ein verzweigter oder unverzweigter Alkenylrest mit 2 bis 18 C-Atomen, ein Cycloalkylrest mit 5 bis 12 C-Atomen, ein Phenylalkylrest mit 7 bis 15 C-Atomen, ein Phenylrest ist, oder dieser Phenyl- oder dieser Phenylalkylrest am Phenylring mit 1 bis 3 Alkylgruppen mit 1 bis 4 C-Atomen substituiert sein kann; oder wobei
dieser Alkylrest substituiert sein kann mit einer oder mehreren -OH, - OCO-R₁₁, -OR₁₄, -NCO oder -NH₂ Gruppen oder Mischungen davon, oder wobei dieser Alkyl- oder Alkenylrest unterbrochen sein kann durch eine oder mehrere -O-, -NH- oder -NR₁₄- Gruppen oder Mischungen davon und die unsubstituiert oder substituiert sein können mit einer oder mehreren -OH, -OR₁₄ oder -NH₂ Gruppen oder Mischungen davon; wobei
**R₁₁** Wasserstoff, ein verzweigter oder unverzweigter Alkylrest mit 1 bis 18 C-Atomen, ein C₅-C₁₂ Cycloalkylrest, ein verzweigter oder unverzweigter Alkenylrest mit 3 bis 8 C-Atomen, ein Phenyl-, Naphthyl-oder C₇-C₁₅-Phenylalkylrest ist; und
**R₁₄** Wasserstoff, ein verzweigter oder unverzweigter Alkylrest mit 1 bis 24 C-Atomen ist
**R₂** ist -OR₁₄, eine Gruppe -C(O)-O-R₁₄, -C(O)-NHR₁₄ oder-C(O)-NR₁₄R'₁₄ ist, wobei R'₁₄ die gleiche Bedeutung hat wie R₁₄; oder
**R₂** ist -SR₁₃, -NHR₁₃ oder -N(R₁₃)₂; oder
**R₂** ist -(CH₂)ₘ-CO-X₁-(Z)ₚ-Y-R₁₅ wobei
**X₁** ist -O- oder -N(R₁₆)-,
**Y** ist -O- oder -N(R₁₇)- oder eine direkte Bindung,
**Z** ist C₂-C₁₂-Alkylen, C₄-C₁₂-Alkylen unterbrochen durch ein oder mehrere Stickstoffatome, Sauerstoffatome oder eine Mischung davon, oder ist C₃-C₁₂-Alkylen, Butenylen, Butynylen, Cyclohexylen or Phenylen, wobei jeder dieser Reste zusätzlich substituiert sein kann durch eine OH-Gruppe oder eine Gruppe: 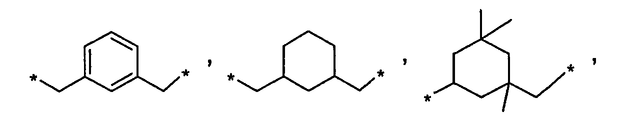 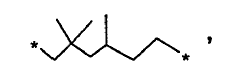 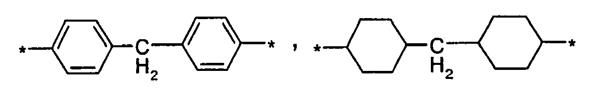 wobei * eine Bindung bedeutet
oder wenn Y eine direkte Bindung ist, kann Z zusätzlich auch eine direkte Bindung sein;
**m** ist 0, 1 oder 2,
**p** ist 1, oder p ist 0 wenn X und Y jeweils-N(R₁₆)- and -N(R₁₇)-sind,
**R₁₅** ist Wasserstoff, C₁-C₁₂-Alkyl, oder eine Gruppe 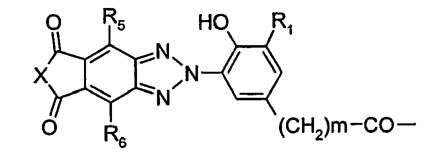 oder 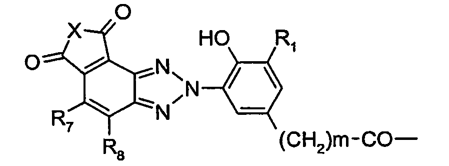 oder eine Gruppe -CO-C(R₁₈)=C(H)R₁₉ oder, wenn Y -N(R₁₇)-ist, formt sie zusammen mit R₁₇ eine Gruppe -CO-CH=CH-CO- wobei
**R₁₈** Wasserstoff oder Methyl ist, und **R₁₉** Wasserstoff, Methyl oder - CO-X₁-R₂₀ ist, wobei
**R₂₀** Wasserstoff, C₁-C₁₂ -Alkyl oder eine Gruppe der Formel 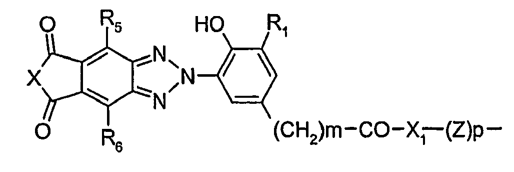 oder 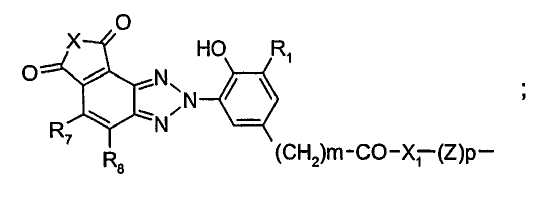 **R₅, R₆, R₇** and **R₈** jeweils unabhängig voneinander Wasserstoff, Halogen, CN, NO₂ oder NH₂ sind,
**R₁₃** ist Alkyl mit 1 bis 20 C-Atomen, Hydroxyalkyl mit 2 bis 20 C-Atomen, Alkenyl mit 3 bis 18 C-Atomen, Cycloalkyl mit 5 bis 12 C-Atomen, Phenylalkyl mit 7 bis 15 C-Atomen, Phenyl oder Naphthyl, die beide mit einem oder zwei Alkylresten mit 1 bis 4 C-Atomen substituiert sein können;
**R₁₆** and **R₁₇** sind unabhängig voneinander Wasserstoff, C₁-C₁₂-Alkyl, C₃-C₁₂-Alkyl unterbrochen durch 1 bis 3 Sauerstoffatome, oder Cyclohexyl oder C₇-C₁₅-Phenylalkyl, und R₁₆ zusammen mit R₁₇ kann auch Ethylen sein, wenn Z Ethylen ist;
**X** ist O oder NE₁ wobei
**E₁** Wasserstoff, ein verzweigter oder unverzweigter Alkylrest mit 1 bis 24 C-Atomen, ein verzweigter oder unverzweigter Alkenylrest mit 2 bis 18 C-Atomen, ein C₂-C₆-Alkinyl, ein C₅-C₁₂-Cycloalkyl, Phenyl, Naphthyl oder C₇-C₁₅-Phenylalkyl; oder dieser verzweigte oder unverzweigte Alkylrest mit 1 bis 24 C-Atomen, dieser verzweigte oder unverzweigte Alkenylrest mit 2 bis 24 C-Atomen, dieser C₂-C₆-Alkyinyl können substituiert sein durch ein oder mehrere -F, -OH, -OR₂₂, -NH₂, -NHR₂₂, - N(R₂₂)₂, -NHCOR₂₃, -NR₂₂COR₂₃, -OCOR₂₄, -COR₂₅, -SO₂R₂₆, - PO(R₂₇)ₙ(R₂₈)₂₋ₙ, -Si(R₂₉)ₙ(R₃₀)₃₋ₙ, -Si(R₂₂)₃, -N⁺(R₂₂)₃ A⁻, -S⁺(R₂₂)₂ A⁻, - Oxiranyl- Gruppen oder Mischungen davon; oder dieser verzweigte oder unverzweigte Alkylrest mit 1 bis 24 C-Atomen, dieser verzweigte oder unverzweigte Alkenylrest mit 2 bis 24 C-Atomen, dieser C₂-C₆-Alkinyl können unterbrochen sein durch ein oder mehrere -O-, -S-, -NH- or - NR₂₂- Gruppen oder Kombinationen davon;
diese Phenyl, Naphthyl oder C₇-C₁₅-Phenylalkylreste können auch mit einem oder mehreren -Halogen, -CN, -CF₃, -NO₂, -NHR₂₂, -N(R₂₂)₂, - SO₂R₂₆, -PO(R₂₇)ₙ(R₂₈)₂₋ₙ, -OH, -OR₂₂, -COR₂₅, -R₂₅; Resten substituiert sein, wobei
**n** 0, 1 oder 2 ist;
**R₂₂** ein verzweigter oder unverzweigter Alkylrest mit 1 bis 18 C-Atomen, verzweigter oder unverzweigter Alkenylrest mit 2 bis 18 C-Atomen, ein C₅-C₁₀ Cycloalkyl, Phenyl oder Naphthyl, C₇-C₁₅ -Phenylalkyl, oder zwei R₂₂ Reste sind, wenn benachbart zu einem N oder Si Atom und sie zusammen mit dem Atom, mit dem sie verbunden sind, einen Pyrrolidin-, Piperidin- oder Morpholin- Ring bilden können;
**R₂₃** ist Wasserstoff, OR₂₂, NHR₂₂, N(R₂₂)₂ oder hat die gleiche Bedeutung wie R₂₂,
**R₂₄** ist OR₂₂, NHR₂₂, N(R₂₂)₂ oder hat die gleiche Bedeutung wie R₂₂,
**R₂₅** ist Wasserstoff, OH, OR₂₂, NHR₂₂ oder N(R₂₂)₂, O-glycidyl oder hat die gleiche Bedeutung wie R₂₂,
**R₂₆** ist OH, OR₂₂, NHR₂₂ oder N(R₂₂)₂,
**R₂₇** ist NH₂, NHR₂₂ oder N(R₂₂)₂,
**R₂₈** ist OH oder OR₂₂,
**R₂₉** ist Cl oder OR₂₂,
**R₃₀** ist verzweigtes oder unverzweigtes C₁-C₁₈ Alkyl; oder
**E₁** ist eine Gruppe 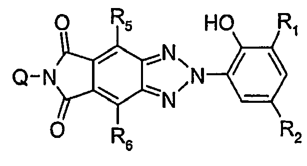 oder 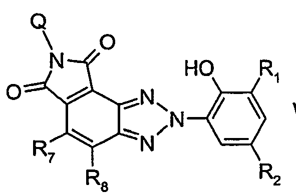 wobei
R₁ bis R₈ die oben angegebene Bedeutung haben und
**Q** verzweigtes oder unverzeigtes C₂-C₁₂-Alkylene, C₂-C₁₂-Alkylene, das durch ein oder mehrere -O-, NH oder NR₁₄ Atome unterbrochen ist, C₅-C₁₀-Cycloalkylen, para-Phenylen oder eine Gruppe 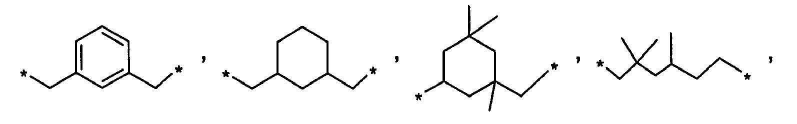 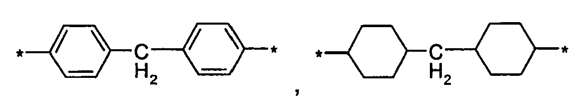 ist, wobei * eine Bindung bedeutet.

4. Mehrschichtlackierung nach einem der Ansprüche 1 bis 3, **dadurch gekennzeichnet, dass** der erfindungsgemäß eingesetzte UV-Absorber (UV1) die nachfolgend genannte Formel (1 b) oder (2c) 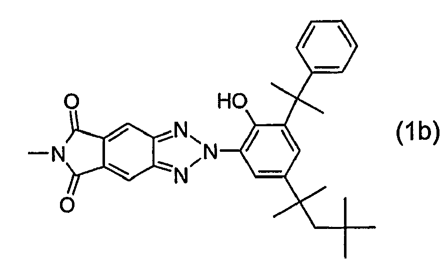 oder 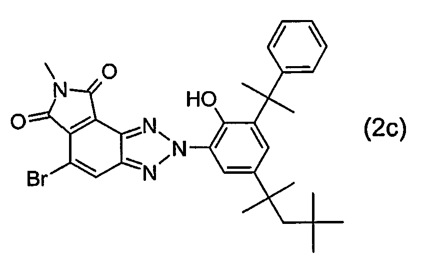 aufweist.

5. Mehrschichtlackierung nach einem der Ansprüche 1 bis 4, **dadurch gekennzeichnet, dass** der erfindungsgemäß eingesetzte UV-Absorber (UV1) im Bereich von 300 bis 405 nm noch mindestens 50% der Absorption, verglichen mit der Absorption im Absorptionsmaximum, aufweist.

6. Mehrschichtlackierung nach einem der Ansprüche 1 bis 5, **dadurch gekennzeichnet, dass** der erfindungsgemäß eingesetzte UV-Absorber (UV1) im Bereich von 405 bis 420 nm noch mindestens 10 % der Absorption, verglichen mit der Absorption im Absorptionsmaximum, aufweist.

7. Mehrschichtlackierung nach einem der Ansprüche 1 bis 6, **dadurch gekennzeichnet, dass** die pigmentierte Beschichtung (P) und/oder die Grundierung (G) zusätzlich mindestens ein weiteres Lichtschutzmittel, insbesondere einen weiteren, vom UV-Absorber (UV1) verschiedenen UV-Absorber (UV2) und/oder mindestens ein Lichtschutzmittel auf Basis sterisch gehinderter Amine und/oder mindestens ein Antioxidans enthält.

8. Mehrschichtlackierung nach einem der Ansprüche 1 bis 7, **dadurch gekennzeichnet, dass** die pigmentierte Beschichtung (P) und/oder die Grundierung (G) den UV-Absorber (UV1) mit einem Absorptionsmaximum von mindestens 370 nm in einer Menge von 0,1 bis 30,0 Gew.- %, bevorzugt 0,5 bis 20,0 Gew.- % und besonders bevorzugt in einer Menge von 0,5 bis 15, 0 Gew.- %, jeweils bezogen auf den Festkörpergehalt der Grundierung bzw. den Festkörpergehalt des pigmentierten Beschichtungsmittels, und/oder die weiteren Lichtschutzmittel in einer Menge von 0 bis 20,0 Gew.- %, bevorzugt 0 bis 12,0 Gew.- % und besonders bevorzugt von 0,1 bis 10,0 Gew.- %, jeweils bezogen auf den Festkörpergehalt der Grundierung bzw. den Festkörpergehalt des pigmentierten Beschichtungsmittels, enthält.

9. Mehrschichtlackierung nach einem der Ansprüche 1 bis 8, **dadurch gekennzeichnet, dass** sie eine auf der pigmentierten Beschichtung (P) angeordnete transparente Beschichtung (K) aufweist.

10. Mehrschichtlackierung nach einem der Ansprüche 1 bis 9, **dadurch gekennzeichnet, dass** sie mindestens eine Grundierung (G), eine darauf angeordnete erste pigmentierte Beschichtung (P1), mindestens eine darauf angeordnete zweite pigmentierte Beschichtung (P2) sowie eine auf der pigmentierten Beschichtung (P2) angeordnete transparente Beschichtung (K) umfasst.

11. Mehrschichtlackierung nach Anspruch 10, **dadurch gekennzeichnet, dass** die erste pigmentierte Beschichtung (P1) und/oder die zweite pigmentierte Beschichtung (P2), insbesondere die erste pigmentierte Beschichtung (P1), den UV-Absorber (UV1) mit einem Absorptionsmaximum von mindestens 370 nm enthält.

12. Mehrschichtlackierung nach einem der Ansprüche 1 bis 11, **dadurch gekennzeichnet, dass** die Grundierung (G) mindestens eine elektrophoretisch abgeschiedene Beschichtung umfasst und/oder dass die pigmentierte Beschichtung (P1) und/oder (P2) unter Verwendung eines wässrigen pigmentierten Beschichtungsmittels erhalten worden sind.

13. Mehrschichtlackierung nach einem der Ansprüche 10 bis 12, **dadurch gekennzeichnet, dass** die pigmentierte Schicht (P2) eine Schichtdicke unterhalb des Deckvermögens, bevorzugt eine Schichtdicke von 40 bis 70 % der Schichtdicke, die zur Erzielung des Deckvermögens erforderlich wäre, aufweist.

14. Mehrschichtlackierung nach einem der Ansprüche 10 bis 13, **dadurch gekennzeichnet, dass**
die Grundierung (G) eine Trockenfilmschichtdicke von 8 bis 60 µm, bevorzugt von 10 bis 40 µm, und/oder
die pigmentierte Beschichtung (P1) eine Trockenfilmschichtdicke von 6 bis 40 µm, bevorzugt von 6 bis 25 µm, und/oder
die pigmentierte Beschichtung (P2) eine Trockenfilmschichtdicke von 3 bis 40 µm, bevorzugt von 3 bis 20 µm, und/oder
die transparente Beschichtung (K) eine Trockenfilmschichtdicke von 8 bis 80 µm, bevorzugt von 10 bis 60 µm,
aufweist.

15. Verfahren zur Herstellung der Mehrschichtlackierungen nach einem der Ansprüche 1 bis 14, bei dem auf eine nicht oder nur partiell oder vollständig ausgehärtete Grundierung (G) mindestens ein pigmentiertes Beschichtungsmittel (B) und ggf. auf die so erhaltene pigmentierte Beschichtung (P) mindestens ein transparentes Beschichtungsmittel (T) zur Herstellung der Beschichtung (K) aufgebracht wird, **dadurch gekennzeichnet, dass** die pigmentierte Beschichtung (P) und/oder die Grundierung (G) mindestens einen UV-Absorber (UV1) enthält, der ein Absorptionsmaximum von mindestens 370 nm aufweist

16. Verfahren nach Anspruch 15, **dadurch gekennzeichnet, dass** auf die Grundierung zunächst ein erstes pigmentiertes Beschichtungsmittel (B1), hierauf ein zweites pigmentiertes Beschichtungsmittel (B2) sowie anschließend ein transparentes Beschichtungsmittel (T) aufgebracht wird und anschließend (B1), (B2), (T) sowie ggf. (G) gemeinsam gehärtet werden.

17. Verfahren nach Anspruch 15 oder 16, **dadurch gekennzeichnet, dass** es in der Automobilserien- und/oder Nutzfahrzeug- und/oder Reparaturlackierung, zur Beschichtung von Karosserie-innen- oder-Außenbauteilen oder von Bauteilen für den Schiff- und Flugzeugbau oder von Bauteilen für Haushalts- und Elektrogeräte eingesetzt wird.

## Claims

1. Multicoat color and/or effect paint system comprising at least one primer (G) and at least one pigmented coating (P) disposed thereon, **characterized in that** the pigmented coating (P) and/or the primer (G) comprise or comprises at least one UV absorber (UV1) which has an absorption maximum of at least 370 nm.

2. Multicoat paint system according to Claim 1, **characterized in that** the pigmented coating (P) and/or the primer (G) comprise or comprises at least one UV absorber (UV1) which has an absorption maximum of 370 nm to 450 nm, preferably of 375 to 450 nm, more preferably of 378 nm to 440 nm, and very preferably of 378 to 420 nm.

3. Multicoat paint system according to Claim 1 or 2, **characterized in that** the UV absorber (UV1) has the following formula (I) or (II), preferably the formula (I) 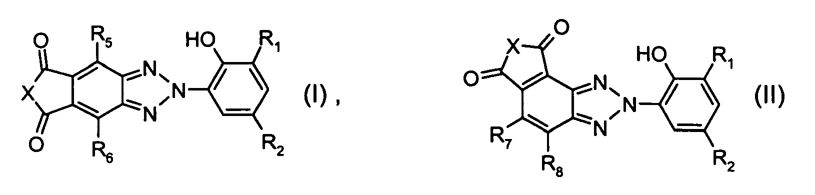 where
**R₁** is hydrogen, a branched or unbranched alkyl radical having 1 to 24 carbon atoms, a branched or unbranched alkenyl radical having 2 to 18 carbon atoms, a cycloalkyl radical having 5 to 12 carbon atoms, a phenylalkyl radical having 7 to 15 carbon atoms, or a phenyl radical, or this phenyl radical or this phenylalkyl radical can be substituted on the phenyl ring by 1 to 4 alkyl groups having 1 to 4 carbon atoms; or where
**R₁** is a group 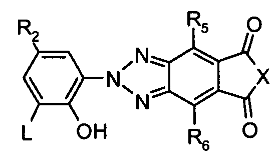 or a group 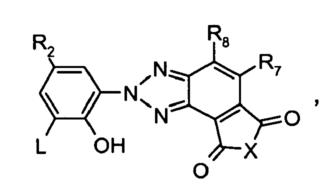 where L is an alkylene radical having 1 to 12
carbon atoms, an alkylidene radical having 2 to 12 carbon atoms, a benzylidene radical, a p-xylene radical or a cycloalkylene radical having 5 to 7 carbon atoms;
**R₂** is a branched or unbranched alkyl radical having 1 to 24 carbon atoms, a branched or unbranched alkenyl radical having 2 to 18 carbon atoms, a cycloalkyl radical having 5 to 12 carbon atoms, a phenylalkyl radical having 7 to 15 carbon atoms, or a phenyl radical, or this phenyl radical or this phenylalkyl radical can be substituted on the phenyl ring by 1 to 3 alkyl groups having 1 to 4 carbon atoms; or where
this alkyl radical can be substituted by one or more -OH, -OCO-R₁₁, -OR₁₄, -NCO or -NH₂ groups or mixtures thereof, or where this alkyl or alkenyl radical can be interrupted by one or more -O-, -NH- or -NR₁₄- groups or mixtures thereof and which can be unsubstituted or substituted by one or more -OH, -OR₁₄ or -NH₂ groups or mixtures thereof; where
**R₁₁** is hydrogen, a branched or unbranched alkyl radical having 1 to 18 carbon atoms, a C₅-C₁₂ cycloalkyl radical, a branched or unbranched alkenyl radical having 3 to 8 carbon atoms or a phenyl, naphthyl or C₇-C₁₅ phenylalkyl radical; and
**R₁₄** is hydrogen or a branched or unbranched alkyl radical having 1 to 24 carbon atoms
**R₂** is -OR₁₄, a group -C(O)-O-R₁₄, -C(O)-NHR₁₄ or -C(O)-NR₁₄R'₁₄, where R'₁₄ has the same definition as R₁₄; or
**R₂** is -SR₁₃, -NHR₁₃ or -N(R₁₃)₂; or
**R₂** is -(CH₂)ₘ-CO-X₁-(Z)ₚ-Y-R₁₅, where
**X₁** is -O- or -N(R₁₆)-,
**Y** is -O- or -N(R₁₇)- or a direct bond,
**Z** is C₂-C₁₂ alkylene, C₄-C₁₂ alkylene interrupted by one or more nitrogen atoms, oxygen atoms or a mixture thereof, or is C₃-C₁₂ alkylene, butenylene, butynylene, cyclohexylene or phenylene, it being possible for each of these radicals to be additionally substituted by an OH group or by a group 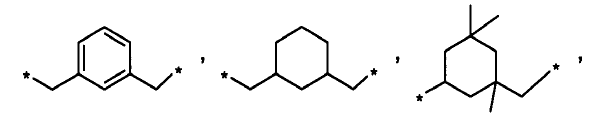 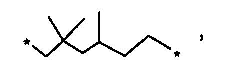 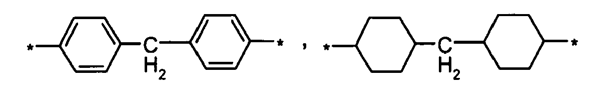 where * denotes a bond
or, if Y is a direct bond, Z as well can also be a direct bond;
**m** is 0, 1 or 2,
**p** is 1, or p is 0 if X and Y are each -N(R₁₆)- and -N(R₁₇)-,
**R₁₅** is hydrogen, C₁-C₁₂ alkyl, or a group 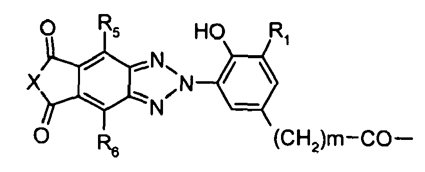 or 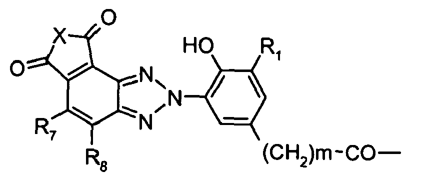 or a group -CO-C(R₁₈)=C(H)R₁₉ or, if Y is -N(R₁₇)-, it forms together with R₁₇ a group -CO-CH=CH-CO-, where
**R₁₈** is hydrogen or methyl, and **R₁₉** is hydrogen, methyl or -CO-X₁-R₂₀, where
**R₂₀** is hydrogen, C₁-C₁₂ alkyl or a group of the formula 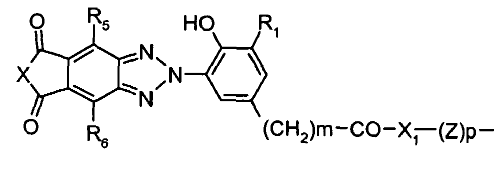 or 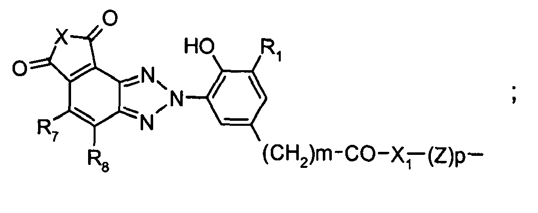 **R₅**, **R₆**, **R₇** and **R₈** are each independently of one another hydrogen, halogen, CN, NO₂ or NH₂,
**R₁₃** is alkyl having 1 to 20 carbon atoms, hydroxyalkyl having 2 to 20 carbon atoms, alkenyl having 3 to 18 carbon atoms, cycloalkyl having 5 to 12 carbon atoms, phenylalkyl having 7 to 15 carbon atoms, or phenyl or naphthyl both of which may be substituted by one or two alkyl radicals having 1 to 4 carbon atoms;
**R₁₆** and **R₁₇** are independently of one another hydrogen, C₁-C₁₂ alkyl, C₃-C₁₂ alkyl interrupted by 1 to 3 oxygen atoms, or cyclohexyl or C₇-C₁₅ phenylalkyl, and R₁₆ together with R₁₇ can also be ethylene if Z is ethylene;
**X** is O or NE₁, where
**E₁** is hydrogen, a branched or unbranched alkyl radical having 1 to 24 carbon atoms, a branched or unbranched alkenyl radical having 2 to 18 carbon atoms, a C₂-C₆ alkynyl, a C₅-C₁₂ cycloalkyl, phenyl, naphthyl or C₇-C₁₅ phenylalkyl; or this branched or unbranched alkyl radical having 1 to 24 carbon atoms, this branched or unbranched alkenyl radical having 2 to 24 carbon atoms, this C₂-C₆ alkynyl can be substituted by one or more -F, - OH, -OR₂₂, -NH₂, -NHR₂₂, -N(R₂₂)₂, -NHCOR₂₃, -NR₂₂COR₂₃, -OCOR₂₄, - COR₂₅, -SO₂R₂₆, -PO(R₂₇)ₙ(R₂₈)₂₋ₙ, -Si(R₂₉)ₙ(R₃₀)₃₋ₙ, -Si(R₂₂)₃, -N⁺(R₂₂)₃ A⁻,-S⁺(R₂₂)₂ A⁻, -oxiranyl groups or mixtures thereof; or this branched or unbranched alkyl radical having 1 to 24 carbon atoms, this branched or unbranched alkenyl radical having 2 to 24 carbon atoms, this C₂-C₆ alkynyl can be interrupted by one or more -O-, -S-, -NH- or -NR₂₂- groups or combinations thereof;
these phenyl, naphthyl or C₇-C₁₅ phenylalkyl radicals can also be substituted by one or more -halogen, -CN, -CF₃, -NO₂, -NHR₂₂, -N(R₂₂)₂, - SO₂R₂₆, -PO(R₂₇)ₙ(R₂₈)₂₋ₙ, -OH, -OR₂₂, -COR₂₅ or -R₂₅ radicals, where
**n** is 0, 1 or 2;
**R₂₂** is a branched or unbranched alkyl radical having 1 to 18 carbon atoms, a branched or unbranched alkenyl radical having 2 to 18 carbon atoms, a C₅-C₁₀ cycloalkyl, phenyl or naphthyl, C₇-C₁₅ phenylalkyl, or are two R₂₂ radicals, if adjacent to a nitrogen or silicon atom, and together with the atom to which they are connected can form a pyrrolidine, piperidine or morpholine ring;
**R₂₃** is hydrogen, OR₂₂, NHR₂₂, N(R₂₂)₂ or has the same definition as R₂₂,
**R₂₄** is OR₂₂, NHR₂₂, N(R₂₂)₂ or has the same definition as R₂₂,
**R₂₅** is hydrogen, OH, OR₂₂, NHR₂₂ or N(R₂₂)₂, O-glycidyl or has the same definition as R₂₂,
**R₂₆** is OH, OR₂₂, NHR₂₂ or N(R₂₂)₂,
**R₂₇** is NH₂, NHR₂₂ or N(R₂₂)₂,
**R₂₈** is OH or OR₂₂,
**R₂₉** is Cl or OR₂₂,
**R₃₀** is branched or unbranched C₁-C₁₈ alkyl; or
**E₁** is a group 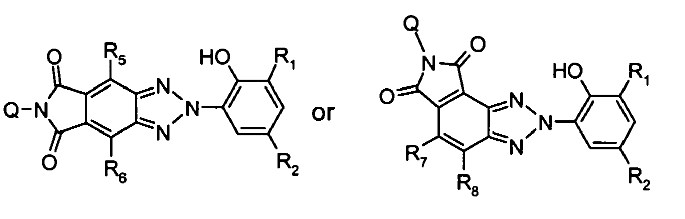 where
R₁ to R₈ are as defined above and
**Q** is branched or unbranched C₂-C₁₂ alkylene, C₂-C₁₂ alkylene which is interrupted by one or more -O-, NH or NR₁₄ atoms, C₅-C₁₀ cycloalkylene, para-phenylene or a group 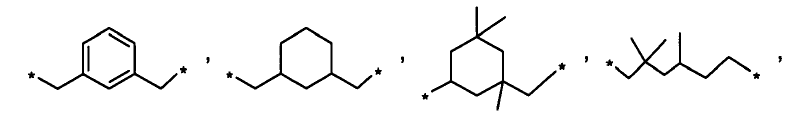 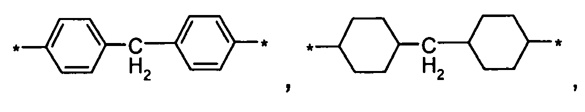 where * denotes a bond.

4. Multicoat paint system according to any one of Claims 1 to 3, **characterized in that** the UV absorber (UV1) used in accordance with the invention has the below-stated formula (1 b) or (2c)

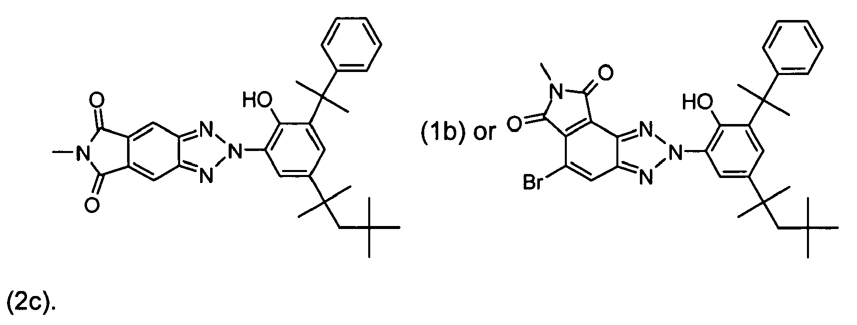

5. Multicoat paint system according to any one of Claims 1 to 4, **characterized in that** the UV absorber (UV1) used in accordance with the invention in the range from 300 to 405 nm still exhibits at least 50% of the absorption as compared with the absorption at the absorption maximum.

6. Multicoat paint system according to any one of Claims 1 to 5, **characterized in that** the UV absorber (UV1) used in accordance with the invention in the range from 405 to 420 nm still exhibits at least 10% of the absorption as compared with the absorption at the absorption maximum.

7. Multicoat paint system according to any one of Claims 1 to 6, **characterized in that** the pigmented coating (P) and/or the primer (G) further comprise or comprises at least one further light stabilizer, in particular a further UV absorber (UV2), different from UV absorber (UV1), and/or at least one light stabilizer based on sterically hindered amines and/or at least one antioxidant.

8. Multicoat paint system according to any one of Claims 1 to 7, **characterized in that** the pigmented coating (P) and/or the primer (G) comprise or comprises the UV absorber (UV1) having an absorption maximum of at least 370 nm in an amount of 0.1% to 30.0%, preferably 0.5% to 20.0%, and more preferably in an amount of 0.5% to 15.0%, by weight, based in each case on the solids content of the primer or on the solids content of the pigmented coating material, and/or the further light stabilizers in an amount of 0 to 20.0%, preferably 0 to 12.0%, and more preferably of 0.1% to 10.0%, by weight, based in each case on the solids content of the primer or on the solids content of the pigmented coating material.

9. Multicoat paint system according to any one of Claims 1 to 8, **characterized in that** it has a transparent coating (K) disposed atop the pigmented coating (P).

10. Multicoat paint system according to any one of Claims 1 to 9, **characterized in that** it comprises at least one primer (G), a first pigmented coating (P1) disposed thereon, at least one second pigmented coating (P2) disposed thereon, and a transparent coating (K) disposed atop the pigmented coating (P2).

11. Multicoat paint system according to Claim 10, **characterized in that** the first pigmented coating (P1) and/or the second pigmented coating (P2), in particular the first pigmented coating (P1), comprise or comprises the UV absorber (UV1) having an absorption maximum of at least 370 nm.

12. Multicoat paint system according to any one of Claims 1 to 11, **characterized in that** the primer (G) comprises at least one electrophoretically deposited coating and/or **characterized in that** the pigmented coating (P1) and/or (P2) have or has been obtained using an aqueous pigmented coating material.

13. Multicoat paint system according to any one of Claims 10 to 12, **characterized in that** the pigmented coat (P2) has a sub-hiding coat thickness, preferably a coat thickness of 40% to 70% of the coat thickness which would be necessary to achieve hiding.

14. Multicoat paint system according to any one of Claims 10 to 13, **characterized in that**
the primer (G) has a dry film thickness of 8 to 60 µm, preferably of 10 to 40 µm, and/or
the pigmented coating (P1) has a dry film thickness of 6 to 40 µm, preferably of 6 to 25 µm, and/or
the pigmented coating (P2) has a dry film thickness of 3 to 40 µm, preferably of 3 to 20 µm, and/or
the transparent coating (K) has a dry film thickness of 8 to 80 µm, preferably of 10 to 60 µm.

15. Process for producing the multicoat paint systems according to any one of Claims 1 to 14, in which at least one pigmented coating material (B) is applied to an uncured or only part-cured or fully cured primer (G), and if desired at least one transparent coating material (T) is applied to the resultant pigmented coating (P), to produce the coating (K), **characterized in that** the pigmented coating (P) and/or the primer (G) comprise or comprises at least one UV absorber (UV1) which has an absorption maximum of at least 370 nm.

16. Process according to Claim 15, **characterized in that** atop the primer first a first pigmented coating material (B1), thereafter a second pigmented coating material (B2), and subsequently a transparent coating material (T) are applied and subsequently (B1), (B2), (T) and, where appropriate, (G) are jointly cured.

17. Process according to Claim 15 or 16, **characterized in that** it is employed in automotive OEM finishing and/or commercial-vehicle finishing and/or refinishing, for coating interior or exterior bodywork components or for coating components for marine and aircraft construction or components for household and electrical appliances.

## Revendications

1. Revêtement de peinture multicouche colorant et/ou à effet, à base d'au moins un primaire (G) et d'au moins un revêtement pigmenté (P) disposé sur celui-ci, **caractérisé en ce que** le revêtement pigmenté (P) et/ou le primaire (G) contient au moins un absorbeur UV (UV1) qui présente un maximum d'absorption à au moins 370 nm.

2. Revêtement de peinture multicouche selon la revendication 1, **caractérisé en ce que** le revêtement pigmenté (P) et/ou le primaire (G) contient au moins un absorbeur UV (UV1) qui présente un maximum d'absorption de 370 nm à 450 nm, de préférence de 375 à 450 nm, de façon particulièrement préférée de 378 nm à 440 nm et de façon tout particulièrement préférée, de 378 à 420 nm.

3. Revêtement de peinture multicouche selon la revendication 1 ou 2, **caractérisé en ce que** l'absorbeur UV (UV1) présente la formule (I) ou (II) ci-après, de préférence la formule (I) 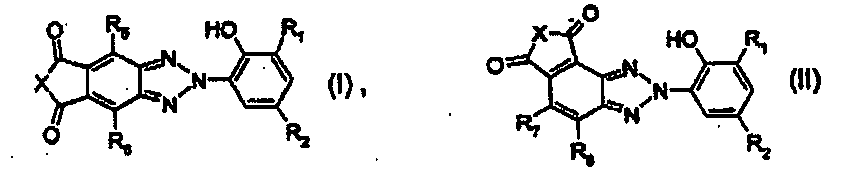 formules dans lesquelles
**R₁** est un atome d'hydrogène, un radical alkyle ramifié ou non ramifié ayant de 1 à 24 atomes de carbone, un radical alcényle ramifié ou non ramifié ayant de 2 à 18 atomes de carbone, un radical cycloalkyle ayant de 5 à 12 atomes de carbone, un radical phénylalkyle ayant de 7 à 15 atomes de carbone, un radical phényle ; ou ce radical phényle ou ce radical phénylalkyle sur le cycle phényle peut être substitué par 1 à 4 groupes alkyle ayant de 1 à 4 atomes de carbone ; ou dans lesquelles
**R₁** est un groupe 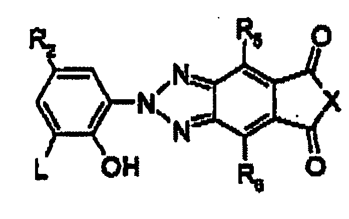 ou un groupe 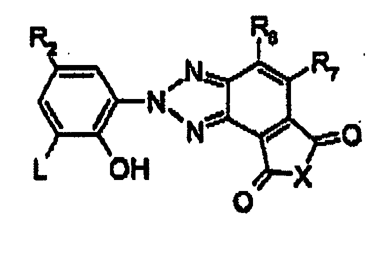 L étant un radical alkylène
ayant de 1 à 12 atomes de carbone, un radical alkylidène ayant de 2 à 12 atomes de carbone, un radical benzylidène, un radical p-xylène ou un radical cycloalkylène ayant de 5 à 7 atomes de carbone ;
**R₂** est un radical alkyle ramifié ou non ramifié, ayant de 1 à 24 atomes de carbone, un radical alcényle ramifié ou non ramifié ayant de 2 à 18 atomes de carbone, un radical cycloalkyle ayant de 5 à 12 atomes de carbone, un radical phénylalkyle ayant de 7 à 15 atomes de carbone, un radical phényle, ou ce radical phényle ou ce radical phénylalkyle sur le cycle phényle peut être substitué par 1 à 3 groupes alkyle ayant de 1 à 4 atomes de carbone ; ou dans lesquelles
ce radical alkyle peut être substitué par un ou plusieurs groupes -OH, -OCO-R₁₁, -OR₁₄, -NCO ou -NH₂ ou des mélanges de ceux-ci, ou dans lesquelles ce radical alkyle ou alcényle peut être interrompu par un ou plusieurs groupes -O-, -NH- ou -NR₁₄- ou des mélanges de ceux-ci et qui peuvent être non substitués ou substitués par un ou plusieurs groupes -OH, -OR₁₄ ou -NH₂ ou des mélanges de ceux-ci ;
**R₁₁** étant un atome d'hydrogène, un radical alkyle ramifié ou non ramifié ayant de 1 à 18 atomes de carbone, un radical cycloalkyle en C₅-C₁₂, un radical alcényle ramifié ou non ramifié ayant de 3 à 8 atomes de carbone, un radical phényle, naphtyle ou phénylalkyle en C₇-C₁₅ ; et
**R₁₄** étant un atome d'hydrogène, un radical alkyle ramifié ou non ramifié ayant de 1 à 24 atomes de carbone,
**R₂** est -OR₁₄, un groupe -C(O)-O-R₁₄, -C(O)-NHR₁₄ ou -C(O)-NR₁₄R'₁₄, R'₁₄ ayant la même signification que R₁₄ ; ou
**R₂** est SR₁₃, -NHR₁₃ ou -N(R₁₃)₂ ; ou
**R₂** est -(CH₂)ₘ-CO-X₁-(Z)ₚ-Y-R₁₅,
**X₁** étant -O- ou -N(R₁₆)-,
**Y** étant -O- ou -N(R₁₇)- ou une liaison directe,
**Z** étant un groupe alkylène en C₂-C₁₂, un groupe alkylène en C₄-C₁₂ interrompu par un ou plusieurs atomes d'azote, atomes d'oxygène ou un mélange de ceux-ci, ou étant un radical alkylène en C₃-C₁₂, buténylène, butynylène, cyclohexylène ou phénylène, chacun de ces radicaux pouvant en outre être substitué par un groupe OH ou un groupe : 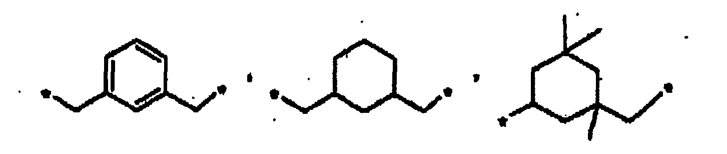 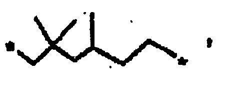 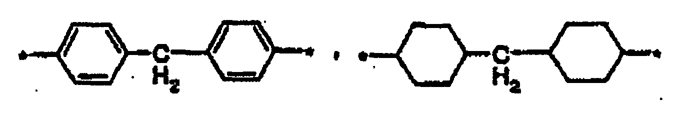 * représentant une liaison
ou lorsque Y est une liaison directe, Z pouvant en outre être également une liaison directe ;
**m** étant 0, 1 ou 2,
**p** étant 1, ou p étant 0 lorsque X et Y représentent, respectivement, -N(R₁₆₎- et -N(R₁₇)-,
**R₁₅** étant un atome d'hydrogène, un groupe alkyle en C₁-C₁₂ ou un groupe 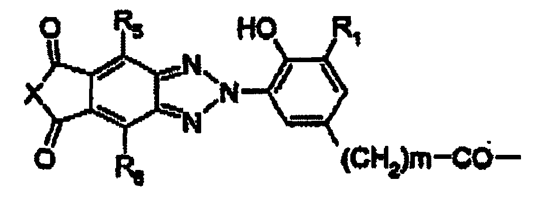 ou 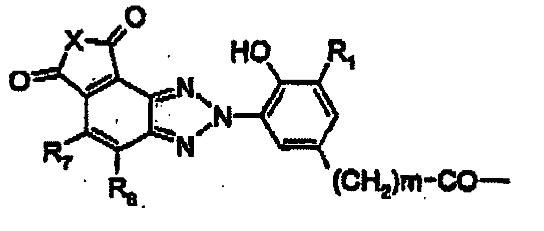 ou un groupe -CO-C(R₁₈)=C(H)R₁₉ ou, lorsque Y est -N(R₁₇)-, formant conjointement avec R₁₇ un groupe -CO-CH=CH-CO-,
**R₁₈** étant un atome d'hydrogène ou le groupe méthyle, et **R₁₉** étant un atome d'hydrogène, un groupe méthyle ou -CO-X₁-R₂₀,
**R₂₀** étant un atome d'hydrogène, un groupe alkyle en C₁-C₁₂ ou un groupe de formule 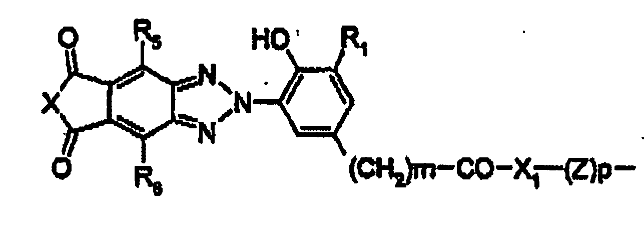 ou 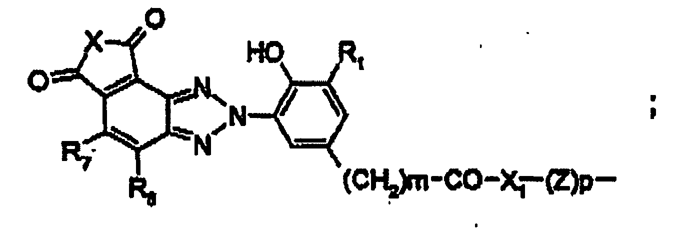 **R₅, R₆, R₇** et **R₈** représentent chacun, indépendamment les uns des autres, un atome d'hydrogène ou d'halogène, CN, NO₂ ou NH₂,
**R₁₃** est un groupe alkyle ayant de 1 à 20 atomes de carbone, hydroxyalkyle ayant de 2 à 20 atomes de carbone, alcényle ayant de 3 à 18 atomes de carbone, cycloalkyle ayant de 5 à 12 atomes de carbone, phénylalkyle ayant de 7 à 15 atomes de carbone, phényle ou naphtyle, qui peuvent l'un et l'autre être substitués par un ou deux radicaux alkyle ayant de 1 à 4 atomes de carbone ;
**R₁₆** et **R₁₇** représentent, indépendamment l'un de l'autre, un atome d'hydrogène, un groupe alkyle en C₁-C₁₂, alkyle en C₃-C₁₂ interrompu par 1 à 3 atomes d'oxygène, ou un groupe cyclohexyle ou phénylalkyle en C₇-C₁₅, et R₁₆ peut également former conjointement avec R₁₇ un groupe éthylène lorsque Z est un groupe éthylène ;
**X** est O ou NE₁,
**E₁** représentant un atome d'hydrogène, un radical alkyle ramifié ou non ramifié ayant de 1 à 24 atomes de carbone, un radical alcényle ramifié ou non ramifié ayant de 2 à 18 atomes de carbone, un radical alcynyle en C₂-C₆, un radical cycloalkyle en C₅-C₁₂, phényle, naphtyle ou phénylalkyle en C₇-C₁₅ ; ou ce radical alkyle ramifié ou non ramifié ayant de 1 à 24 atomes de carbone, ce radical alcényle ramifié ou non ramifié ayant de 2 à 24 atomes de carbone, ce radical alcynyle en C₂-C₆ pouvant être substitués par un ou plusieurs atomes -F ou groupes -OH, -OR₂₂, -NH₂, -NHR₂₂, -N(R₂₂)₂, -NHCOR₂₃, -NR₂₂COR₂₃, -OCOR₂₄, -COR₂₅, -SO₂R₂₆, -PO(R₂₇)ₙ(R₂₈)₂₋ₙ, -Si(R₂₉)ₙ(R₃₀)₃₋ₙ, -Si(R₂₂)₃, -N⁺(R₂₂)₃ A⁻, -S⁺(R₂₂)₂ A⁻, -oxirannyle ou mélanges de ceux-ci ; ou ce radical alkyle ramifié ou non ramifié ayant de 1 à 24 atomes de carbone, ce radical alcényle ramifié ou non ramifié ayant de 2 à 24 atomes de carbone, ce radical alcynyle en C₂-C₆ pouvant être interrompus par un ou plusieurs atomes -O-, -S- ou groupes -NH- ou -NR₂₂- ou associations de ceux-ci ; ces radicaux phényle, naphtyle et phénylalkyle en C₇-C₁₅ pouvant également porter un ou plusieurs substituants -halogéno, -CN, -CF₃, -NO₂, -NHR₂₂, -N(R_{22)2,} -SO₂R₂₆, -PO(R₂₇)ₙ(R₂₈₎₂₋ₙ, -OH, -OR₂₂, -COR₂₅, -R₂₅,
n étant 0, 1 ou 2 ;
**R₂₂** étant un radical alkyle ramifié ou non ramifié ayant de 1 à 18 atomes de carbone, un radical cycloalkyle en C₅-C₁₀, phényle ou naphtyle, phénylalkyle en C₇-C₁₅, ou deux radicaux R₂₂, s'ils ne sont pas voisins d'un atome de N ou Si, peuvent former ensemble, avec l'atome auquel ils sont fixés, un cycle pyrrolidine, pipéridine ou morpholine ;
**R₂₃** étant un atome d'hydrogène, OR₂₂, NHR₂₂, N(R₂₂)₂ ou ayant la même signification que R₂₂,
**R₂₄** étant OR₂₂, NHR₂₂, N(R₂₂)₂ ou ayant la même signification que R₂₂,
**R₂₅** étant un atome d'hydrogène, OH, OR₂₂, NHR₂₂ ou N(R₂₂)₂, O-glycidyle ou ayant la même signification que R₂₂,
**R₂₆** étant OH, OR₂₂, NHR₂₂ ou N(R₂₂)₂,
**R₂₇** étant NH₂, NHR₂₂ ou N(R₂₂)₂,
**R₂₈** étant OH ou OR₂₂,
**R₂₉** étant Cl ou OR₂₂,
**R₃₀** étant un groupe alkyle en C₁-C₁₈ ramifié ou non ramifié ; ou
**E₁** étant un groupe 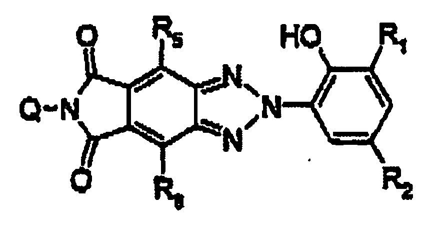 ou 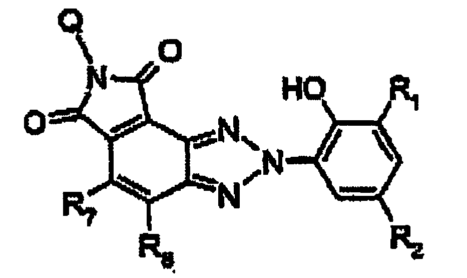 R₁ à R₈ ayant les significations données plus haut et
**Q** représentant un groupe alkylène en C₂-C₁₂ ramifié ou non ramifié, alkylène en C₂-C₁₂ qui est interrompu par un ou plusieurs atomes -O- ou groupes NH ou NR₁₄, un groupe cycloalkylène en C₅-C₁₀, para-phénylène ou un groupe 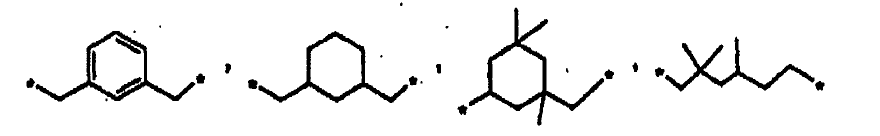 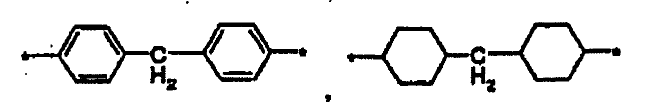 * signifiant une liaison.

4. Revêtement de peinture multicouche selon l'une quelconque des revendications 1 à 3, **caractérisé en ce que** l'absorbeur UV utilisé selon l'invention (UV1) correspond à la formule (1b) ou (2c) indiquée ci-après 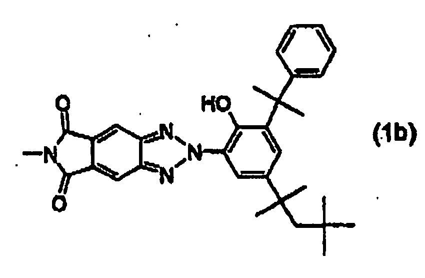 ou

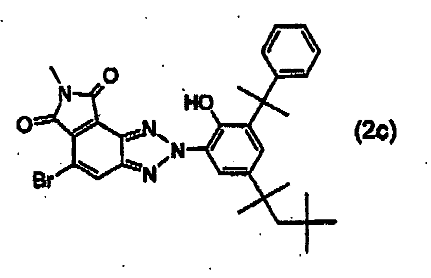

5. Revêtement de peinture multicouche selon l'une quelconque des revendications 1 à 4, **caractérisé en ce que** l'absorbeur UV utilisé selon l'invention (UV1) présente dans la plage de 300 à 405 nm encore au moins 50 % de l'absorption, par comparaison à l'absorption au maximum d'absorption.

6. Revêtement de peinture multicouche selon l'une quelconque des revendications 1 à 5, **caractérisé en ce que** l'absorbeur UV utilisé selon l'invention (UV1) présente dans la plage de 405 à 420 nm encore au moins 10 % de l'absorption, par comparaison à l'absorption au maximum d'absorption.

7. Revêtement de peinture multicouche selon l'une quelconque des revendications 1 à 6, **caractérisé en ce que** le revêtement pigmenté (P) et/ou le primaire (G) en outre contient(tiennent) au moins un autre photoprotecteur, en particulier un autre absorbeur UV (UV2) différent de l'absorbeur UV (UV1) et/ou au moins un photoprotecteur à base d'amines à empêchement stérique et/ou au moins un antioxydant.

8. Revêtement de peinture multicouche selon l'une quelconque des revendications 1 à 7, **caractérisé en ce que** le revêtement pigmenté (P) et/ou le primaire (G) en outre contient(tiennent) l'absorbeur UV (UV1) ayant un maximum d'absorption à au moins 370 nm en une quantité de 0,1 à 30,0 % en poids, de préférence de 0,5 à 20,0 % en poids et de façon particulièrement préférée, en une quantité de 0,5 à 15,0 % en poids, chaque fois par rapport à la teneur en matière solide du primaire ou à la teneur en matière solide de la composition de revêtement pigmentée, et/ou les autres photoprotecteurs en une quantité de 0 à 20,0 % en poids, de préférence de 0 à 12,0 % en poids et de façon particulièrement préférée, de 0,1 à 10,0 % en poids, chaque fois par rapport à la teneur en matière solide du primaire ou à la teneur en matière solide de la composition de revêtement pigmentée.

9. Revêtement de peinture multicouche selon l'une quelconque des revendications 1 à 8, **caractérisé en ce qu'**il comporte un revêtement transparent (K) disposé sur le revêtement pigmenté (P).

10. Revêtement de peinture multicouche selon l'une quelconque des revendications 1 à 9, **caractérisé en ce qu'**il comprend au moins un primaire (G), un premier revêtement pigmenté (P1) disposé sur celui-ci, au moins un deuxième revêtement pigmenté (P2) disposé sur ce dernier, ainsi qu'un revêtement transparent (K) disposé sur le revêtement pigmenté (P2).

11. Revêtement de peinture multicouche selon la revendication 10, **caractérisé en ce que** le premier revêtement pigmenté (P1) et/ou le deuxième revêtement pigmenté (P2), en particulier le premier revêtement pigmenté (P1) contient(contiennent) l'absorbeur UV (UV1) ayant un maximum d'absorption à au moins 370 nm.

12. Revêtement de peinture multicouche selon l'une quelconque des revendications 1 à 11, **caractérisé en ce que** le primaire (G) comprend au moins un revêtement déposé par électrophorèse et/ou **en ce que** le revêtement pigmenté (P1) et/ou le revêtement pigmenté (P2) ont été obtenus avec utilisation d'une composition aqueuse de revêtement pigmentée.

13. Revêtement de peinture multicouche selon l'une quelconque des revendications 10 à 12, **caractérisé en ce que** la couche pigmentée (P2) présente une épaisseur de couche inférieure au pouvoir couvrant, de préférence une épaisseur de couche représentant 40 à 70 % de l'épaisseur de couche qui serait nécessaire pour l'obtention du pouvoir couvrant.

14. Revêtement de peinture multicouche selon l'une quelconque des revendications 10 à 13, **caractérisé en ce que**
le primaire (G) présente une épaisseur de couche de feuil sec de 8 à 60 µm, de préférence de 10 à 40 µm et/ou
le revêtement pigmenté (P1) présente une épaisseur de couche de feuil sec de 6 à 40 µm, de préférence de 6 à 25 µm et/ou
le revêtement pigmenté (P2) présente une épaisseur de couche de feuil sec de 3 à 40 µm, de préférence de 3 à 20 µm et/ou
le revêtement transparent (K) présente une épaisseur de couche de feuil sec de 6 à 80 µm, de préférence de 10 à 60 µm.

15. Procédé pour la production de revêtements de peinture multicouches selon l'une quelconque des revendications 1 à 14, dans lequel on applique sur le primaire (G) non durci ou durci seulement partiellement ou totalement au moins une composition de revêtement pigmentée (B) et éventuellement sur le revêtement pigmenté (P) ainsi obtenu au moins une composition de revêtement transparent (T) pour la production du revêtement (K), **caractérisé en ce que** le revêtement pigmenté (P) et/ou le primaire (G) contient (contiennent) au moins un absorbeur UV (UV1) qui présente un maximum d'absorption à au moins 370 nm.

16. Procédé selon la revendication 15, **caractérisé en ce que** sur le primaire on applique d'abord une première composition de revêtement pigmentée (B1), on applique sur celle-ci une deuxième composition de revêtement pigmentée (B2) ainsi qu'ensuite une composition de revêtement transparent (T) et on fait ensuite durcir ensemble (B1), (B2), (T) ainsi qu'éventuellement (G).

17. Procédé selon la revendication 15 ou 16, **caractérisé en ce qu'**il est utilisé dans le peinturage de réparation et/ou la mise en peinture en série d'automobiles et/ou de véhicules utilitaires, pour le revêtement de pièces de construction intérieures ou extérieures de carrosseries ou de pièces pour la construction de bateaux et d'aéronefs ou de pièces de construction pour appareils électriques et ménagers.
